# EUROPÄISCHE PATENTSCHRIFT

(11) **EP 4 542 776 B1**
(45) Veröffentlichungstag und Bekanntmachung des Hinweises auf die Patenterteilung: **21.01.2026**
(21) Anmeldenummer: 23204283.8
(22) Anmeldetag: 18.10.2023
(51) Int. Cl.: H01R 9/05, H01R 4/50, H01R 9/22, H01R 4/64, H02G 15/10

(54) **KONTAKTSYSTEM ZUR KONTAKTIERUNG EINER KABELABSCHIRMUNG IN EINEM VERTEILERGEHÄUSE**
CONTACT SYSTEM FOR CONTACTING A CABLE SHIELD IN A DISTRIBUTION HOUSING
SYSTÈME DE CONTACT POUR CONNECTER UN BLINDAGE DE CÂBLE DANS UN BOÎTIER DE COLLECTEUR

(43) Veröffentlichungstag der Anmeldung: 23.04.2025
(73) Patentinhaber: Gebauer & Griller Kabelwerke Gesellschaft m.b.H., 1190 Wien (AT)
(72) Erfinder: Stadtschnitzer, Markus, 2151 Schletz (AT); Rabl, Josef, 2171 Herrnbaumgarten (AT)
(74) Vertreter: KLIMENT & HENHAPEL

(56) Entgegenhaltungen:
- DE-A1- 3 124 374
- DE-U1- 202013 006 412
- FR-A5- 2 082 842

## Beschreibung

### GEBIET DER ERFINDUNG

Die Erfindung betrifft ein Kontaktsystem zur elektrischen Kontaktierung einer Abschirmung eines elektrisch leitenden Kabels in einem Verteilergehäuse, umfassend
- ein Verteilergehäuse mit zumindest einem Kabeleingang zur Ein-und/oder Durchführung eines elektrisch leitenden Kabels in einen Gehäuseinnenraum des Verteilergehäuses, wobei im Gehäuseinnenraum zumindest eine Kontaktstelle angeordnet ist;
- zumindest ein elektrisch leitendes Kabel mit einem elektrischen Innenleiter, einer den elektrischen Innenleiter umgebenden Primärisolation, einer die Primärisolation umgebenden Sekundärisolation, sowie mit einer Abschirmung, welche Abschirmung den elektrischen Innenleiter umhüllt und zwischen der Primärisolation und der Sekundärisolation des elektrisch leitenden Kabels verlaufend angeordnet ist; sowie
- zumindest ein auf der Primärisolation des zumindest einen elektrisch leitenden Kabels angeordnetes Kontaktelement, welches Kontaktelement eine Innenhülse umfasst, wobei die Innenhülse in einer Kontaktposition zwischen der Primärisolation und der Abschirmung positioniert ist und eine erste Kontaktoberfläche der Innenhülse die Abschirmung des elektrisch leitenden Kabels kontaktiert.

### STAND DER TECHNIK

Elektrische Kabel, deren Innenleiter hohe Spannungen führen, wie dies beispielsweise beim Einsatz in einem Elektro- oder Hybridfahrzeug als Hochvolt-Kabel zur Leistungsversorgung eines elektrischen Antriebsmotors der Fall ist, bedürfen einer elektrischen Abschirmung, um eine Beeinflussung von in der Nähe befindlichen elektrischen bzw. elektronischen Komponenten zu verhindern. Unter dem Begriff "Hochvolt" wird typischerweise ein Spannungsbereich von etwa 300 V bis 800 V verstanden. Solche Hochvolt-Kabel verbinden dabei beispielsweise eine Strom- oder Spannungsquelle, insbesondere einen Akkumulator oder einen Generator, mit einem Verbraucher wie einem elektrischen Antriebsmotor.

Die Abschirmung kann auch zum Schutz des Innenleiters gegen äußere elektrische und/oder magnetische Störeinflüsse dienen. Zum Zwecke der Abschirmung ist meist ein Schirmgeflecht, welches aus einer Vielzahl an Litzen aus einem elektrisch leitenden Material besteht, vorgesehen, welches den elektrischen Innenleiter umhüllt. Das Schirmgeflecht befindet sich dabei in der Regel innerhalb eines Kabelmantels und ist dabei zwischen einer Primärisolation, auch Innenmantel bezeichnet, welche zwischen Innenleiter und Schirmgeflecht angeordnet ist, und einer Sekundärisolation, die auch Außenmantel oder Kabelmantel genannt wird, welche das Schirmgeflecht außen umgibt, angeordnet. Um die Schirmwirkung des Schirmgeflechts zu erhöhen kann zusätzlich entweder zwischen der Primärisolation und dem Schirmgeflecht oder zwischen dem Schirmgeflecht und der Sekundärisolation eine Abschirmfolie vorgesehen sein, welche üblicherweise eine kunststoffkaschierte Aluminiumfolie ist. Diese Schirmfolie überträgt keine nennenswerten Ströme und wird im Falle der Kontaktierung des Schirmgeflechts üblicherweise nicht mitkontaktiert, sondern beim Freilegen des Schirmgeflechts meist abgetrennt.

Um die Abschirmung des Innenleiters bzw. den Potentialausgleich des Schirmgeflechts sicherzustellen, ist es notwendig, dass das Schirmgeflecht an den Endabschnitten des elektrischen Kabels mit einer Masse verbindbar ist. Zu diesem Zweck ist in der Regel zumindest ein Kontaktelement an jedem Ende des Kabels vorgesehen, welches Kontaktelement mit dem Schirmgeflecht elektrisch leitend verbunden und an die Masse anschließbar ist.

Bekannte Verfahren zum Verbinden eines Schirmgeflechts aus Kupfer mit einem Kontaktelement, wie beispielsweise in der DE 10 2015 004 485 B4 offenbart, werden üblicherweise dadurch realisiert, dass eine Stützhülse auf die Sekundärisolation des Kabels aufgeschoben wird und das freigelegte Schirmgeflecht über die Stützhülse zurückgeschlagen wird. Ein Kontaktteil wird danach über die Stützhülse und das darauf aufliegende Schirmgeflecht geführt und zur Kontaktierung mit einem geeigneten Werkzeug radial verpresst, beispielsweise vercrimpt. Durch den Verpressvorgang wird das Schirmgeflecht zwischen Stützhülse und Kontaktteil geklemmt. Diese Verfahren setzen allerdings voraus, dass ausschließlich Stützhülsen bzw. Kontaktteile eingesetzt werden, die aus Werkstoffen mit hoher Querleitfähigkeit gefertigt sind, da die Verpressung des Schirmgeflechts nur punktuell erfolgt.

Als leitende Materialien für Schirmgeflechte eignen sich neben Kupfer oder Kupferlegierungen auch Aluminium oder Aluminiumlegierungen, wobei Letztgenannte aufgrund ihrer geringen Masse in vielen Anwendungsgebieten, beispielsweise im Automobilsektor bei elektrisch angetriebenen Automobilen, eingesetzt werden. Werden jedoch Aluminiumdrähte aus Aluminium oder einer Aluminiumlegierung miteinander verpresst, so sind diese Drähte naturgemäß mit einer nur sehr schwer durchdringbaren Oxidschicht an ihrer Oberfläche passiviert. Ein in der Kupfertechnik üblicher Kontaktierungsvorgang für ein Schirmgeflecht mit der üblichen radialen Verpressung ist daher nicht geeignet, eine Kontaktierung aller Aluminiumdrähte des Aluminium-Schirmgeflechts mit dem Kontaktelement herzustellen, da die auf den Aluminiumdrähten ausgebildeten Oxidschichten die Querleitfähigkeit in den verpressten Kontaktbereichen verhindern. Daher können mit herkömmlichen Verfahren die Oxidschichten nicht für alle Drähte des Schirmgeflechts durchbrochen werden. Es hat sich weiters gezeigt, dass mit bekannten Kontaktierungsverfahren bei Aluminium-Schirmgeflechten keine über eine Temperaturwechselbelastung stabile Verbindung erzielt werden kann.

FR 2 082 842 A5 offenbart ein Kontaktsystem nach dem Oberbegriff des Anspruchs 1.

Um die gleichmäßige Schirmkontaktierung auch bei Aluminium-Schirmgeflechten zu ermöglichen, sind beispielsweise aus der EP 3 417 514 B1, der EP 3 422 480 B1 sowie der EP 3422 481 B1 Kontaktsysteme zur Kontaktierung eines Aluminium-Schirmgeflechts mit einem Kontaktelement bekannt, wobei das Schirmgeflecht eines elektrisch leitenden Kabels in seiner Kontaktposition jeweils zwischen einer Innenhülse und einer Außenhülse des Kontaktelements festgeklemmt wird und dabei ein Kontakt zwischen dem Schirmgeflecht und dem Kontaktelement hergestellt wird. Die Kontaktoberflächen der Innenhülse und der Außenhülse sind zueinander korrespondierend ausgebildet, und können je nach Ausführung in Längsrichtung des Kabels beispielsweise konisch, zylindrisch oder stufenförmig geformt sein, um die Klemmwirkung auf das zwischen der Innenhülse und der Außenhülse geklemmte Schirmgeflecht zu erhöhen.

Wo solche elektrisch leitenden Kabel durch eine Gehäusewand geführt werden, entsteht allerdings eine Lücke in der Schirmung, weshalb der Einsatz sogenannter EMV-Kabelverschraubungen erforderlich ist, die die Abschirmung beim Kabeleintritt durch ein Gehäuse kontaktieren. Der Begriff "EMV" ist die Abkürzung für Elektromagnetische Verträglichkeit und bezeichnet gemäß der EMV-Richtlinie 2014/30/EU die Fähigkeit einer elektrischen Einrichtung, in ihrer elektromagnetischen Umgebung zufriedenstellend zu funktionieren, ohne diese Umgebung, zu der auch andere Einrichtungen gehören, unzulässig zu beeinflussen. EMV-konforme Steckerverbindungen für die Automobilindustrie sind in der deutschen Richtlinie LV215 geregelt.

Definitionsgemäß ist ein Gehäuse einer elektrischen Einrichtung wie beispielsweise eines elektrischen oder elektronischen Gerätes oder eines Verteilergehäuses dann "EMV-dicht", wenn das betreffende Gehäuse eine durchgehende, unterbrechungsfreie elektromagnetische Schirmung bildet, wobei andere elektrische Einrichtungen wie Geräte, Verteilergehäuse oder dergleichen, die sich in der elektromagnetischen Umgebung der betreffenden Einrichtung befinden, zufriedenstellend funktionieren und nicht durch ungewollte elektrische oder elektromagnetische Effekte gestört zu werden.

Die gängigste und wirkungsvollste Maßnahme gegen elektromagnetische Störungen ist ein Faraday'scher Käfig, der am einfachsten durch ein Gehäuse aus Metall realisiert werden kann. Um bei einem Verteilergehäuse eine möglichst hohe EMV-Dichtheit bzw. eine durchgehende, unterbrechungsfreie elektromagnetische Schirmung zu erzielen, ist allerdings darauf zu achten, dass Ritzen, Spalten oder Öffnungen beispielsweise für Gehäusedeckel, Steckverbindungen, Schalter oder für digitale Anzeigendisplays in einem solchen Verteilergehäuse zwingend elektromagnetisch schirmend abgedichtet werden müssen, um die erforderliche Dichtheit des Faraday'schen Käfigs im Betrieb eines solchen Verteilergehäuses gewährleisten zu können.

Bei Verteilergehäusen insbesondere mit geringen Abmessungen, bei denen meist mehrere geschirmte Kabel durch entsprechende Gehäuseöffnungen hindurch an einem sogenannten High-Voltage Header (abgekürzt: HV-Header), also einer Kontaktstelle für Hochvolt-Kabel im Gehäuseinnenraum elektrisch leitend verbunden werden, können allerdings herkömmliche EMV-Kabelverschraubungen einerseits aufgrund ihrer meist unzureichenden Montagefähigkeit bei der Assemblierung sowie andererseits aus Platzgründen aufgrund der eingeschränkten Zugänglichkeit nicht eingesetzt werden.

Beispielsweise ist aus der EP 3 022 806 B1 eine Einrichtung umfassend ein Gehäuse und eine Vorrichtung zur elektrischen Kontaktierung einer Abschirmung eines elektrischen Kabels an einem Gehäuse bekannt geworden. Bei dieser Einrichtung wird ein geschirmtes Kabel durch eine Gehäuseöffnung in ein Metallgehäuse eingeführt, wobei das Kabel im Montagezustand mit einem doppelten Kontaktbügel mit zwei voneinander beabstandeten Bügelabschnitten innerhalb des Gehäuses befestigt ist. Ein erster Bügelabschnitt, in dem der Kabelmantel geklemmt ist, dient dabei als Zugentlastungsabschnitt. Ein zweiter Bügelabschnitt, in dem die Abschirmung des elektrischen Kabels geklemmt ist, dient als Kontaktabschnitt. Je nach Ausführung sind die beiden Bügelabschnitte entweder auf einem Widerlager, welches Teil des Metallgehäuses ist, festgeschraubt. Oder die beiden Bügelabschnitte weisen schellenförmige Gegenbügel auf, die die beiden Bügelabschnitte jeweils zu einem Vollring rund um das zu klemmende elektrische Kabel ergänzen.

Nachteilig bei dieser Ausführung gemäß EP 3 022 806 B1 ist zumindest, dass die Kabeldurchführung bzw. Kabelhalterung mit zwei separaten, voneinander beabstandeten Bügeln, die auf ein und dasselbe Kabel wirken, aufwendig ist. Weiters ist von Nachteil, dass zwischen der Gehäuseöffnung für die Kabeldurchführung und dem ersten Bügelabschnitt zur Zugentlastung des Kabels jeweils ein Spaltabstand zwischen dem Gehäuse und dem Kabel frei bleibt, der mit einem separaten ringförmigen Dichtungssegment mit abstehenden Kontaktzungen ausgefüllt werden muss, um die in diesem Spalt der Gehäusedurchführung unterbrochene EMV-Schirmung etwas zu verbessern.

Bei einem solchen Verteilergehäuse sind jedoch üblicherweise zwei oder mehrere Kabelanschlüsse vorgesehen. Bei jeder Kabeldurchführung bzw. bei jedem Kabel muss daher der jeweils freibleibende Spaltabstand zwischen Gehäuse und Kabel mit einem eigenen Dichtungssegment abgedichtet werden. Dies ist nicht nur aufwendig und umständlich während der Assemblierung, sondern auch fehleranfällig. Sobald ein solches Dichtungssegment in seiner Lage im Spalt zwischen Gehäuse und Kabel verrutscht, ist die EMV-Schirmung unterbrochen. Die Qualität der Schirmung bei dieser Ausführung hängt also maßgeblich von der Beschaffenheit und EMV-Dichtheit des verwendeten Gehäuses in Zusammenwirkung mit dem einen oder den mehreren separaten Dichtungssegmenten ab. Die aus EP 3 022 806 B1 bekannt gewordene Ausführung ist für eine zuverlässige EMV-Schirmung des Verteilergehäuses insbesondere beim Einsatz in einem Elektro- oder Hybridfahrzeug, das im Fahrbetrieb starken Vibrationen und Erschütterungen ausgesetzt ist, nur eingeschränkt geeignet.

### AUFGABE DER ERFINDUNG

Es ist daher eine Aufgabe der Erfindung, die Nachteile von bekannten Kontaktsystemen des Stands der Technik zu überwinden und ein Kontaktsystem vorzuschlagen, welches in einfacher Art und Weise eine zuverlässige Kontaktierung und Klemmhalterung der Abschirmung eines elektrisch leitenden Kabels im Bereich der Kabeldurchführung in ein Verteilergehäuse ermöglicht, wobei die EMV-Schirmung insbesondere im Bereich der Kabeldurchführung unterbrechungsfrei in Längsrichtung des betreffenden Kabels sein soll.

### DARSTELLUNG DER ERFINDUNG

Diese Aufgabe wird von einem gattungsgemäßen Kontaktsystem erfindungsgemäß dadurch gelöst, dass
- das zumindest eine elektrisch leitende Kabel durch den zumindest einen Kabeleingang des Verteilergehäuses durchgeführt und mit einem abisolierten, kontaktierten Kabelende seines elektrischen Innenleiters an der zumindest einen Kontaktstelle elektrisch leitend befestigt ist, wobei das zumindest eine Kontaktelement im Gehäuseinnenraum zwischen dem Kabeleingang und der Kontaktstelle angeordnet ist, und wobei
- ein, vorzugsweise zweiteiliges, Schirmgehäuse mit einer unteren Schirmgehäuseschale und mit einer oberen Schirmgehäuseschale innerhalb des Verteilergehäuses angeordnet ist, sowie weiters
- zumindest ein Klemmelement innerhalb des Verteilergehäuses angeordnet ist, welches Klemmelement eine erste Klemmbacke und eine zweite Klemmbacke zur Klemmung des zumindest einen Kontaktelements sowie von Endabschnitten der Schirmgehäuseschalen umfasst, wobei
- das Schirmgehäuse die Kontaktstelle sowie das daran befestigte Kabelende des elektrisch leitenden Kabels umhüllt, und wobei ein Endabschnitt der unteren Schirmgehäuseschale sowie ein Endabschnitt der oberen Schirmgehäuseschale jeweils zwischen dem zumindest einen Kontaktelement und den Klemmbacken des zumindest einen Klemmelements festgeklemmt sind, sodass das Schirmgehäuse am Kontaktelement oder der Abschirmung anliegend sowie das Kontaktelement oder die Abschirmung zumindest teilweise umhüllend angepresst ist und dabei die Abschirmung des zumindest einen elektrisch leitenden Kabels zumindest indirekt kontaktiert.

Das erfindungsgemäße Kontaktsystem bietet den Vorteil, dass eine zuverlässige EMV-Schirmung insbesondere im Bereich der Kabeldurchführung unterbrechungsfrei in Längsrichtung des zumindest einen elektrisch leitenden Kabels gewährleistet ist. Das Verteilergehäuse dient im Wesentlichen zur Halterung des Schirmgehäuses, des zumindest einen Klemmelements sowie der zumindest einen Kontaktstelle, die innerhalb des Verteilergehäuses angeordnet sind. Das Verteilergehäuse an sich kann aus beliebigen Materialien gefertigt sein und muss für sich genommen weder flüssigkeitsdicht ausgeführt sein, noch EMV-Schirmungswirkung haben. Beispielsweise kann das Verteilergehäuse als zumindest abschnittsweise offene Gitter- oder Rahmenkonstruktion gestaltet sein, welche die in seinem Innenraum befindlichen Bauteile, insbesondere das Schirmgehäuse, zumindest ein oder mehrere Klemmelemente sowie zumindest eine Kontaktstelle, die vom Schirmgehäuse umhüllt ist, umgibt.

Das Schirmgehäuse bewirkt die EMV-Schirmung und ist so beschaffen, dass in Einbaulage die Kontaktstelle sowie das daran befestigte kontaktierte Kabelende des elektrisch leitenden Kabels vom Schirmgehäuse umhüllt sind. Um eine durchgehende, unterbrechungsfreie bzw. EMV-dichte Schirmung auch im Bereich der zumindest einen Kabeldurchführung durch das Schirmgehäuse zu gewährleisten, sind Endabschnitte der unteren Schirmgehäuseschale sowie der oberen Schirmgehäuseschale jeweils zwischen dem zumindest einen Kontaktelement, welches Kontaktelement in Kontaktposition auf dem betreffenden elektrisch leitenden Kabel aufgeschoben ist und dessen Abschirmung kontaktiert, und den beiden Klemmbacken des zumindest einen Klemmelements festgeklemmt. Die Endabschnitte sind dabei jeweils komplementär geformt zu Konturabschnitten des zumindest einen Kontaktelements, welches die Endabschnitte der jeweiligen Schirmgehäuseschalen zumindest abschnittsweise umgeben. In Einbaulage liegt das Schirmgehäuse mit seinen Endabschnitten dabei am Kontaktelement oder der Abschirmung an, und zwar so, dass das Schirmgehäuse zumindest teilweise das betreffende Kontaktelement oder die Abschirmung umhüllt und vom Klemmelement an das Kontaktelement oder die Abschirmung gepresst wird.

Erfindungsgemäß umfasst das zumindest eine Kontaktelement, welches auf der Primärisolation des elektrisch leitenden Kabels angeordnet ist, eine Innenhülse, wobei die Innenhülse in Kontaktposition zwischen der Primärisolation und der Abschirmung positioniert ist. Die Innenhülse weist an ihrer Außenseite eine erste Kontaktoberfläche auf, welche in Kontaktposition die Abschirmung des elektrisch leitenden Kabels kontaktiert.

Je nach Ausführung des Kontaktelements ist dabei wie folgt zu unterscheiden:
- In einer ersten Ausführungsvariante des Kontaktelements ist dieses beispielsweise einteilig ausgebildet und ist die Innenhülse. In diesem Fall wird die Abschirmung des betreffenden Kabels in der Kontaktposition zwischen der Innenhülse und dem Schirmgehäuse geklemmt. Die Abschirmung steht in Einbaulage somit in direktem elektrisch leitendem Kontakt sowohl mit der Innenhülse, welches das Kontaktelement ist, als auch mit dem Schirmgehäuse. Die Innenhülse wirkt dabei als Stützhülse, um in Einbaulage, in der das Schirmgehäuse zumindest abschnittsweise am Kontaktelement in Form der Innenhülse und/oder an der Abschirmung anliegt und vom Klemmelement gegen das Kontaktelement und/oder die Abschirmung gepresst ist, den in einer Kabeldurchführung innerhalb der Innenhülse angeordneten elektrischen Innenleiter samt der Primärisolation abzustützen und diesen nicht zu beschädigen.
- In einer zweiten Ausführungsvariante des Kontaktelements ist beispielsweise das Kontaktelement zumindest zweiteilig ausgebildet und umfasst neben der Innenhülse weiters eine Außenhülse, wobei die Innenhülse zumindest teilweise in die Außenhülse einsteckbar ist. In diesem Fall wird die Abschirmung des betreffenden Kabels in der Kontaktposition mit der Außenhülse und der darin angeordneten Innenhülse des Kontaktelements zweckmäßig so geführt, dass die Abschirmung des elektrisch leitenden Kabels zwischen der Innenhülse und der Außenhülse geklemmt und mit dem Kontaktelement kontaktiert ist. Das Schirmgehäuse liegt in diesem Fall in Einbaulage am Kontaktelement, insbesondere an der Außenhülse des Kontaktelements, an und wird vom Klemmelement gegen das Kontaktelement gepresst. Die Abschirmung steht somit in einem direkten elektrisch leitenden Kontakt mit der Innenhülse und Außenhülse des Kontaktelements. Das Schirmgehäuse kontaktiert die Abschirmung zumindest indirekt.

In der erstgenannten Ausführung des Kontaktelements beispielsweise als einteiliges Kontaktelement in Form einer Innenhülse bzw. Stützhülse kann es also insbesondere bei einer Abschirmung in Form eines Schirmgeflechts vorkommen, dass die Innenhülse nicht zur Gänze von der Abschirmung bzw. dem Schirmgeflecht umhüllt ist und in Kontaktposition das Schirmgehäuse daher sowohl abschnittsweise am Kontaktelement, als auch abschnittsweise an der Abschirmung anliegt. Gemäß dieser Ausführungsvariante wird das Schirmgehäuse durch die Klemmbacken des Klemmelements sowohl gegen das Kontaktelement in Form der Innenhülse, als auch gegen die Abschirmung gepresst, wobei das Schirmgehäuse das Kontaktelement und/oder die Abschirmung zumindest teilweise umhüllt. Es wird damit zumindest ein indirekter elektrisch leitender Kontakt zwischen der Abschirmung des betreffenden elektrisch leitenden Kabels und dem Schirmgehäuse hergestellt.

Im Falle der Ausführung eines erfindungsgemäßen Kontaktsystems mit zwei oder mehreren elektrisch leitenden Kabeln kann die durchgehende, unterbrechungsfreie bzw. EMV-dichte Schirmung im Bereich der zumindest zwei Kabeldurchführungen in zweckmäßiger Weise so erfolgen, dass auf jedem elektrisch leitenden Kabel jeweils ein eigenes Kontaktelement, welches eine Innenhülse umfasst, angeordnet ist. Jedes Kontaktelement ist dabei auf der Primärisolation des betreffenden elektrisch leitenden Kabels angeordnet bzw. auf die jeweilige Primärisolation aufgeschoben.

Weitere Vorteile und Effekte der Erfindung sowie vorteilhafte Ausführungsvarianten können den abhängigen Ansprüchen sowie der Beschreibung entnommen werden.

Die hier und im Folgenden verwendeten Positionsangaben von Bauteilen oder Komponenten eines Kontaktsystems, wie beispielsweise die Begriffe "oben", "unten", "oberhalb", "unterhalb", "vorne", "hinten", "seitlich", "innerhalb", "außerhalb", "horizontal", "vertikal", "in axialer Richtung", "in radialer Richtung", und dergleichen, dienen im Wesentlichen dem besseren Verständnis der Erfindung, insbesondere in Verbindung mit den nachfolgenden Zeichnungen. Die verwendeten Positionsangaben können sich möglicherweise auf bestimmte Positionen von einzelnen Bauteilen in deren Einbaulage innerhalb eines Kontaktsystems oder auf einzelnen Ansichten in den Figuren beziehen. In jedem Fall sind solche Positionsangaben dem Fachmann geläufig.

In einer besonders einfach handzuhabenden Ausführung der Erfindung kann bei einem Kontaktsystem vorgesehen sein, dass das zumindest eine Kontaktelement die Innenhülse ist.

Wie zuvor bereits erwähnt, ist in dieser erfindungsgemäßen Ausführung des Kontaktsystems das Kontaktelement einteilig ausgebildet, was bei der Assemblierung des anzuschließenden elektrischen Kabels Vorteile bietet. In diesem Fall wird die Abschirmung des betreffenden Kabels in der Kontaktposition zwischen der Innenhülse und dem Schirmgehäuse geklemmt. Die Abschirmung steht in Einbaulage somit in einem direkten elektrisch leitenden Kontakt sowohl mit der Innenhülse, also mit dem einteiligen Kontaktelement, als auch mit dem Schirmgehäuse. Die Innenhülse wirkt dabei als Stützhülse, um in Einbaulage, in der das Schirmgehäuse zumindest abschnittsweise an der Innenhülse und/oder an der Abschirmung anliegt und vom Klemmelement gegen die Innenhülse und/oder die Abschirmung gepresst ist, den in einer Kabeldurchführung innerhalb der Innenhülse angeordneten elektrischen Innenleiter samt der Primärisolation abzustützen und diesen nicht zu beschädigen.

In einer alternativen Ausführung der Erfindung kann bei einem Kontaktsystem das zumindest eine Kontaktelement weiterhin eine Außenhülse umfassen, wobei in der Kontaktposition die Innenhülse zumindest teilweise innerhalb der Außenhülse angeordnet ist, wobei die Außenhülse eine zweite Kontaktoberfläche aufweist, und wobei die erste Kontaktoberfläche der Innenhülse und die zweite Kontaktoberfläche der Außenhülse derart ausgebildet sind, dass die Abschirmung des elektrisch leitenden Kabels in einer Kontaktposition zwischen der Innenhülse und der Außenhülse geklemmt und mit dem Kontaktelement kontaktiert ist, wobei das Schirmgehäuse am Kontaktelement, vorzugsweise an der Außenhülse des Kontaktelements, anliegend sowie das Kontaktelement zumindest teilweise umhüllend angepresst ist und dabei die Abschirmung des zumindest einen elektrisch leitenden Kabels zumindest indirekt kontaktiert.

Vorzugsweise liegt in der Kontaktposition das Schirmgehäuse am Kontaktelement zumindest abschnittsweise direkt an, wodurch ein direkter elektrisch leitender Kontakt zwischen dem Schirmgehäuse und dem Kontaktelement, insbesondere der Außenhülse des Kontaktelements, hergestellt ist.

Ein solches Kontaktelement umfassend eine Außenhülse sowie eine in die Außenhülse einsteckbare oder einschiebbare Innenhülse bietet den Vorteil, dass die Abschirmung des elektrisch leitenden Kabels in seiner Kontaktposition jeweils zwischen der Innenhülse und der Außenhülse des Kontaktelements festgeklemmt ist und dabei ein Kontakt zwischen der Abschirmung, beispielsweise in Form eines Schirmgeflechts, und dem Kontaktelement hergestellt wird. Die Kontaktoberflächen der Innenhülse und der Außenhülse sind zueinander korrespondierend ausgebildet, und können je nach Ausführung in Längsrichtung des Kabels beispielsweise konisch, zylindrisch oder stufenförmig geformt sein, um die Klemmwirkung auf das zwischen der Innenhülse und der Außenhülse geklemmte Schirmgeflecht zu erhöhen.

Im Falle der Ausführung eines erfindungsgemäßen Kontaktsystems mit zwei oder mehreren elektrisch leitenden Kabeln kann die durchgehende, unterbrechungsfreie Schirmung im Bereich der zumindest zwei Kabeldurchführungen in zweckmäßiger Weise jeweils so erfolgen, dass auf jedem elektrisch leitenden Kabel ein eigenes Kontaktelement umfassend eine Außenhülse sowie eine in die Außenhülse einschiebbare Innenhülse angeordnet ist. Jedes Kontaktelement ist dabei auf der Primärisolation des betreffenden elektrisch leitenden Kabels angeordnet bzw. auf die jeweilige Primärisolation aufgeschoben, wobei die Abschirmung des betreffenden Kabels in einer Kontaktposition jeweils zwischen der Innenhülse und der Außenhülse des jeweiligen Kontaktelements geklemmt ist und in elektrisch leitendem Kontakt mit diesem Kontaktelement steht. Je nach Anordnung der Kabel in Bezug zum Verteilergehäuse bzw. zum Schirmgehäuse können die Kontaktelemente von zwei oder mehreren elektrisch leitenden Kabeln wahlweise mit einem gemeinsamen Klemmelement oder aber mit jeweils eigenen Klemmelementen an entsprechenden Endabschnitten des Schirmgehäuses festgeklemmt sein.

In einer weiteren bevorzugten Ausführung der Erfindung kann es vorteilhaft sein, wenn bei einem Kontaktsystem das zumindest eine Klemmelement in seiner Einbaulage in einer Gehäuseführung innerhalb des Verteilergehäuses positioniert ist.

Durch die Vorpositionierung des zumindest einen Klemmelements in einer Gehäuseführung des Verteilergehäuses wird die Montage des zumindest einen elektrisch leitenden Kabels vereinfacht. Durch die Positionierung des Klemmelements in Bezug zum Verteilergehäuse wird auch die Position des Kontaktelements, das am jeweiligen elektrisch leitenden Kabel angeordnet ist und in Einbaulage vom Klemmelement mit entsprechenden Endabschnitten des Schirmgehäuses festgeklemmt wird, festgelegt.

Insbesondere im Fall der Ausführung eines erfindungsgemäßen Kontaktsystems mit mehreren elektrisch leitenden Kabeln, die in zwei oder mehreren Klemmelementen festgeklemmt sind, bietet diese Ausführung Vorteile bei der Montage. Zweckmäßiger Weise ist dabei jedes einzelne Klemmelement in einer Gehäuseführung innerhalb des Verteilergehäuses vorpositioniert. Die Assemblierung der elektrisch leitenden Kabel wird dadurch wesentlich erleichtert und die Qualität der EMV-Schirmung erhöht. Insbesondere die Positionierung der einzelnen Kontaktelemente entlang der jeweiligen Kabel wird dadurch erleichtert, sodass die betreffenden Kontaktelemente jeweils in einem bestimmten Klemmelement gemeinsam mit Endabschnitten des Schirmgehäuses festgeklemmt werden können.

Um mit dem zumindest einen Klemmelement eine verbesserte Klemmwirkung zwischen dem Schirmgehäuse und dem jeweiligen Kontaktelement zu erzielen, kann in einer weiteren Ausführungsform des erfindungsgemäßen Kontaktsystems das zumindest eine Klemmelement so ausgeführt sein, dass die beiden Klemmbacken formschlüssig oder kraftschlüssig, vorzugsweise mittels Schraubverbindungen, Steckverbindungen oder Rastverbindungen, miteinander verbindbar sind.

Als formschlüssige Verbindungsmittel können an sich bekannte Rast-oder Steckverbindungen dienen, die an einem oder an beiden der Klemmbacken angeordnet sind, um diese Klemmbacken formschlüssig miteinander zu einem Klemmelement verbinden zu können. Vorzugsweise können solche formschlüssigen Verbindungsmittel lösbar ausgebildet sein, um die Klemmbacken eines zusammengesteckten Klemmelements erforderlichenfalls beschädigungsfrei wieder öffnen zu können.

Als kraftschlüssige Verbindungsmittel können an sich bekannte Schraub- oder Klemmverbindungen dienen, mit denen die Klemmbacken kraftschlüssig zu einem Klemmelement verbunden werden können. Schraubverbindungen bieten dabei den Vorteil, dass die Klemmbacken je nach Ausführung mit einem gängigen Werkzeug wie einem Schraubenzieher oder einem Schraubenschlüssel mit dosierter Kraftwirkung verschraubt werden können. Erforderlichenfalls können solche miteinander verschraubten Klemmbacken eines Klemmelements beschädigungsfrei wieder geöffnet werden.

Selbstverständlich können im Rahmen der Erfindung bei einem Kontaktsystem mit zwei oder mehreren Klemmelementen sämtliche Klemmelemente formschlüssig oder kraftschlüssig, vorzugsweise mittels Schraubverbindungen, Steckverbindungen oder Rastverbindungen, verbunden sein. So können die zwei oder mehreren Klemmelemente beispielsweise jeweils Verschraubungen aufweisen, mit denen die jeweiligen Klemmbacken miteinander verbunden bzw. verschraubt werden können.

Um mit einem Klemmelement eine besondere gleichmäßige Anpressung der Endabschnitte der Schirmgehäuseschalen sowie des innerhalb der Endabschnitte mitgeklemmten Kontaktelements zu ermöglichen, kann es vorteilhaft sein, wenn bei einem erfindungsgemäßen Kontaktsystem die erste Klemmbacke sowie die zweite Klemmbacke jeweils zumindest eine Ausnehmung aufweisen, wobei die zumindest zwei Ausnehmungen jeweils komplementär geformt sind zu den Endabschnitten der Schirmgehäuseschalen des Schirmgehäuses.

In einer vorteilhaften Weiterentwicklung der Erfindung kann bei einem Kontaktsystem das Schirmgehäuse zwischen der unteren Schirmgehäuseschale und der oberen Schirmgehäuseschale einen, vorzugsweise umlaufenden, EMV-Dichtungsrand aufweisen und eine durchgehende, unterbrechungsfreie elektromagnetische Schirmung bilden.

Um eine weiter verbesserte EMV-Schirmung des Schirmgehäuses zu gewährleisten, kann der EMV-Dichtungsrand beispielsweise als Bördelung des Schirmblechs ausgeführt sein, sodass die beiden Schirmgehäuseschalen in Einbaulage bündig aneinander liegen und solcherart eine durchgehende, unterbrechungsfreie elektromagnetische Schirmung bilden. Vorzugsweise ist der EMV-Dichtungsrand umlaufend ausgeführt, sodass die Bördelung des Schirmgehäuses entlang der gesamten komplementär geformten Randabschnitte der unteren und der oberen Schirmgehäuseschale verläuft und die beiden Schirmgehäuseschalen an ihren Randabschnitten bündig zusammengefügt bzw. zusammengesteckt werden können. In Einbaulage schließen die untere und obere Schirmgehäuseschale das Innere des Schirmgehäuses unter Ausbildung einer durchgehenden, unterbrechungsfreien elektromagnetischen Schirmung ab.

In einer weiteren bevorzugten Ausführungsform kann bei einem erfindungsgemäßen Kontaktsystem das Schirmgehäuse aus einem elektrisch leitfähigen Material hergestellt sein.

Ein elektrisch leitfähiges Schirmgehäuse, das beispielsweise aus Blech, also einem Walzwerkserzeugnis aus Metall hergestellt ist, ist robust und umgibt die zumindest eine Kontaktstelle samt den daran befestigten Kabeln mit einer unterbrechungsfreien EMV-Schirmung.

Um ein besonders robustes, witterungsbeständiges Kontaktsystem gemäß der Erfindung bereitzustellen, kann es vorteilhaft sein, wenn das Verteilergehäuse einen Gehäuseunterteil sowie einen Gehäusedeckel umfasst, wobei der Gehäuseunterteil und der Gehäusedeckel den Gehäuseinnenraum, vorzugsweise mit einer zwischen dem Gehäuseunterteil und dem Gehäusedeckel angeordneten Gehäusedichtung, dicht umschließen.

Ein abgedichtetes Verteilergehäuse, das flüssigkeitsdicht ist, bietet Schutz vor Leckagen. In dieser Ausführungsvariante kann das Verteilergehäuse auch im Freien bzw. an Örtlichkeiten, die der Witterung ausgesetzt sind, eingesetzt werden. In zweckmäßiger Weise ist das Verteilergehäuse möglichst kompakt gestaltet, um die Größe der gegebenenfalls eingesetzten Gehäusedichtung möglichst klein zu halten.

Um im Rahmen der Erfindung ein besonders flexibel einsetzbares Kontaktsystem bereitzustellen, kann es vorteilhaft sein, wenn das Verteilergehäuse aus Kunststoff gefertigt ist.

Ein Verteilergehäuse aus Kunststoff bietet zahlreiche Vorteile: Es ist leicht, kann bei entsprechender Formgebung und geeigneter Auswahl eines schlagzähen Kunststoffmaterials formstabil und widerstandsfähig sein, und bietet einen hohen Schutz gegen Leckagen, also Flüssigkeiten, die von außen nicht in das Verteilergehäuse eindringen sollen. Für Hochvolt-Anwendungen wird beispielsweise Polybutylenterephthalat (PBT)-Kunststoff eingesetzt. Dieser Kunststoff zeichnet sich durch eine geringe Wasseraufnahme, hohe Festigkeit und Steifigkeit sowie ein rasches Abkühlverhalten für den Spritzguss aus.

Während das Verteilergehäuse aus Kunststoff also Schutz vor Witterungseinflüssen sowie vor Leckagen bietet, übernimmt das innerhalb des Verteilergehäuses angeordnete Schirmgehäuse die EMV-Schirmung. Das außenliegende Kunststoff-Verteilergehäuse sollte möglichst frei von elektrischer Spannung sein. Gegebenenfalls sollte ein solches Kunststoff-Verteilergehäuse daher mit einem Potenzialausgleich auf Masse verbunden sein zum Schutz vor unerwünschter elektrostatischer Aufladung. Ein Kontaktsystem mit einer solchen "doppelten" Gehäusehülle - außen ein Verteilergehäuse aus Kunststoff, innerhalb des Verteilergehäuses ein Schirmgehäuse - bietet sowohl einen verbesserten Schutz gegen Leckagen sowie gegen elektrische bzw. elektromagnetische Störungen.

Alternativ dazu kann es für einzelne Anwendungsfälle vorteilhaft sein, wenn bei einem erfindungsgemäßen Kontaktsystem das Verteilergehäuse aus Metall oder einer Metalllegierung gefertigt ist.

Insbesondere bei Hochvolt-Systemen, also etwa bei batteriebetriebenen Elektrofahrzeugen, ist der Potentialausgleich ein zentrales Element der Sicherheit. Alle Hochvoltkomponenten, darunter auch die Leistungselektronik und die Hochvoltbatteriekörper, wie auch die Fahrzeugmasse sind über den Potentialausgleich leitend miteinander verbunden.

In einer weiteren vorteilhaften Ausführung der Erfindung kann bei einem Kontaktsystem das zumindest eine elektrisch leitende Kabel mit einem Fixierelement, gegebenenfalls unter Verwendung eines Kabelbinders, am zumindest einen Kabeleingang in das Verteilergehäuse fixiert sein.

Ein solches Fixierelement dient, gegebenenfalls gemeinsam mit einem Kabelbinder, zur Zugentlastung des angeschlossenen Kabels. Je nach Ausführung kann ein Fixierelement beispielsweise als Kabelverschraubung ausgeführt sein. Zugkräfte, die in axialer Längsrichtung auf das betreffende elektrisch leitende Kabel einwirken können, werden vom Fixierelement in das Verteilergehäuse abgeleitet. Vorteilhaft werden damit unerwünschte Zugbelastungen in Längsachsenrichtung des Kabels für die innerhalb des Verteilergehäuses angeordneten Bauteile und Komponenten, insbesondere für die Klemmung des Klemmelements mit dem Schirmgehäuse und dem Kontaktelement, vermieden.

Um eine besonders wirksame Abdichtung des Verteilergehäuses im Bereich der zumindest einen Kabeldurchführung gegen Flüssigkeitseintritt bzw. Leckagen zu erzielen, kann bei einem erfindungsgemäßen Kontaktsystem der zumindest eine Kabeleingang in das Verteilergehäuse mit einer Kabelabdichtung und/oder mit einem Fixierelement abgedichtet sein.

Beispielsweise kann eine flüssigkeitsdichte Kabelabdichtung von außen geschützt innerhalb eines Fixierelements angeordnet sein. Beispielsweise kann als Fixierelement eine Kabelverschraubung mit innenliegender Kabelabdichtung eingesetzt werden. In einem solchen Fall kann das Fixierelement nicht nur zur Zugentlastung des angeschlossenen Kabels gemäß DIN EN 62444, sondern auch zur flüssigkeitsdichten Kabelabdichtung des Kabeleingangs in das Verteilergehäuse dienen.

Zur Kabelabdichtung kann ebenso ein verrastbares Fixierelement eingesetzt werden. Beispielsweise kann ein solches verrastbares Fixierelement eine darin befindliche Dichtung umfassen, die innerhalb des Fixierelements in Position gehalten wird.

Um im Rahmen der Erfindung ein besonders flexibel einsatzbares Kontaktsystem für zwei oder mehrere elektrisch leitende Kabel bereitstellen zu können, kann es vorteilhaft sein, wenn im Verteilergehäuse zusätzlich zu einem ersten Kabeleingang zumindest ein zweiter oder weiterer Kabeleingang an derselben Gehäuseseite und/oder an einer vom ersten Kabeleingang unterschiedlichen Gehäuseseite des Verteilergehäuses angeordnet ist, wobei der erste Kabeleingang und der zumindest eine zweite oder weitere Kabeleingang wahlweise entweder mit einem gemeinsamem Klemmelement oder jeweils mit separaten Klemmelementen versehen ist bzw. sind.

Bei dieser erfindungsgemäßen Ausführung können im Verteilergehäuse zwei oder mehrere Kabeleingänge auf derselben Gehäuseseite vorgesehen sein. In diesem Fall können die zwei oder mehreren Kabeleingänge auf derselben Gehäuseseite mit einem durchgängigen, gemeinsamen Klemmelement ausgestattet sein, wobei das Klemmelement eine entsprechende Anzahl an Ausnehmungen aufweist. Im Falle von Kabeleingängen auf gegenüberliegenden bzw. unterschiedlichen Gehäuseseiten sind jedenfalls separate Klemmelemente, also zumindest ein Klemmelement je Gehäuseseite, erforderlich.

In einer weiteren Ausführungsvariante der Erfindung können bei einem Kontaktsystem die erste und zweite Klemmbacke des zumindest einen Klemmelements aus Metall oder einer Metalllegierung gefertigt sein.

Diese Ausführung kann Vorteile insbesondere in Kombination mit verschraubbaren Klemmbacken bieten. Die Klemmbacken aus Metall ermöglichen insbesondere mittels Verschraubung sehr hohe Klemmkräfte, ohne dass sich die Klemmbacken dabei verformen. Solcherart können die auf den jeweiligen Kabeln angeordneten Kontaktelemente mit dem Schirmgehäuse mit hoher Klemmkraft geklemmt werden.

In einer alternativen Ausführungsvariante der Erfindung können bei einem Kontaktsystem die erste und zweite Klemmbacke des zumindest einen Klemmelements aus Kunststoff gefertigt sein.

In dieser Ausführung können das eine oder die mehreren Klemmelemente besonders günstig und gewichtssparend mit geringem Baugewicht hergestellt werden. Je nach Anforderung an die Klemmbacken können diese beispielsweise mit mechanisch wirkenden Verbindungen, wie Rasthaken, Schnappverbindungen oder dergleichen, ausgerüstet sein. In einem solchen Fall können die Klemmbacken in Einbaulage durch einfaches Zusammendrücken miteinander fixiert werden, wobei eine Klemmung der dazwischen angeordneten Kontaktelemente mit dem Schirmgehäuse erzielt wird.

Weitere Vorteile der Erfindung ergeben sich aus der nachfolgenden Figurenbeschreibung.

### KURZE BESCHREIBUNG DER FIGUREN

Die Erfindung wird nun anhand von Ausführungsbeispielen näher erläutert. Die schematischen Zeichnungen sind beispielhaft und sollen den Erfindungsgedanken zwar darlegen, ihn aber keinesfalls einengen oder gar abschließend wiedergeben.

Dabei zeigen:
- **Fig. 1**: ein erstes Ausführungsbeispiel eines Kontaktsystems gemäß der Erfindung in einer Schnittansicht entlang von Leiterachsen der angeschlossenen elektrisch leitenden Kabel;
- **Fig. 2**: in einer vergrößerten Detailansicht von Fig. 1 eine Kabeldurchführung des gezeigten Kontaktsystems;
- **Fig. 3**: ein Klemmelement eines erfindungsgemäßen Kontaktsystems in einer Schnittansicht quer zur Leiterachse der angeschlossenen elektrisch leitenden Kabel;
- **Fig. 4**: eine vergrößerte Detailansicht von Fig. 3;
- **Fig. 5**: eine Schnittansicht eines zweiteiligen Kontaktelements, welches in einer Kontaktposition an einem elektrisch leitenden Kabel angeordnet ist;
- **Fig. 6A**: eine Schnittansicht eines einteiligen Kontaktelements;
- **Fig. 6B**: eine Schnittansicht des in Fig. 5 gezeigten Kontaktelements;
- **Fig. 7**: eine axonometrische Ansicht der in Fig. 5 gezeigten Anordnung mit dem zweiteiligen Kontaktelement in einer Zwischenposition;
- **Fig. 8**: ein zweites Ausführungsbeispiel eines Kontaktsystems gemäß der Erfindung in einer axonometrischen Ansicht schräg von oben mit einem teilweise freigeschnittenen Verteilergehäuse;
- **Fig. 9**: eine weitere axonometrische Ansicht des in Fig. 8 gezeigten Kontaktsystems schräg von der Seite betrachtet.

### WEGE ZUR AUSFÜHRUNG DER ERFINDUNG

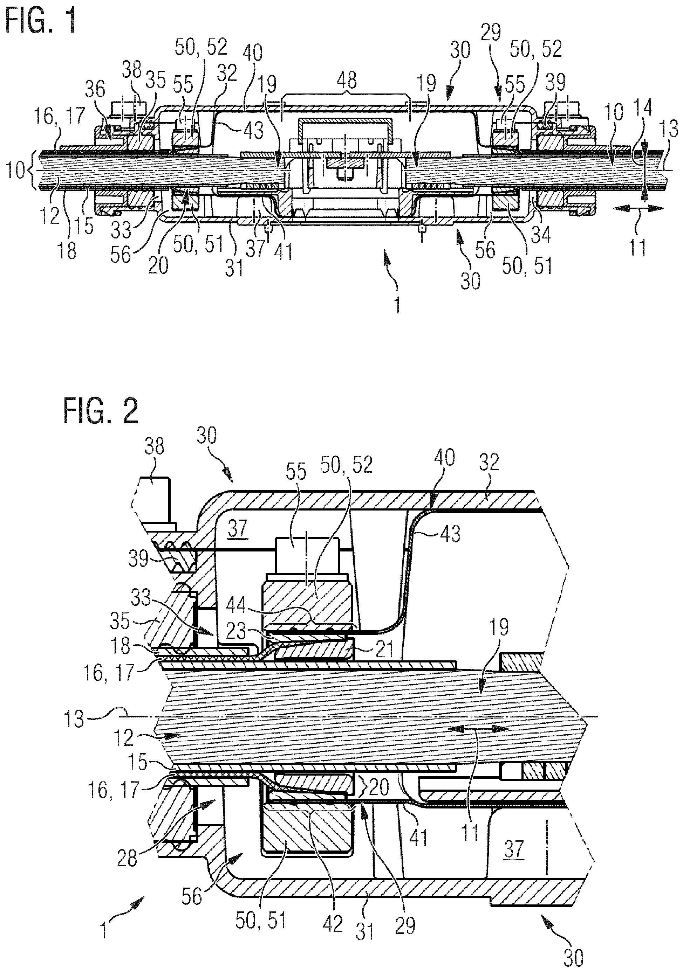

**Fig. 1** zeigt den grundsätzlichen Aufbau eines erfindungsgemäßen Kontaktsystems 1 zur elektrischen Kontaktierung zumindest eines elektrisch leitenden Kabels 10 in einem Verteilergehäuse.

**Fig. 2** zeigt in einer vergrößerten Detailansicht von Fig. 1 eine Kabeldurchführung des gezeigten Kontaktsystems 1. Die folgende Beschreibung bezieht sich gleichermaßen auf die Figuren 1 und 2.

In Fig. 1 sind zumindest zwei elektrisch leitende Kabel 10, die an einander gegenüberliegenden Seiten eines Verteilergehäuses 30 angeordnet sind. Jedes elektrisch leitende Kabel 10 weist in seiner Längsrichtung 11, welche in Fig. 2 mit einem Doppelpfeil 11 symbolisiert ist, einen sich in Längsrichtung 11 erstreckenden mit einem elektrischen Innenleiter 12 auf, der den Kern des Kabels 10 bildet und eine in den Abbildungen geradlinig verlaufende Leiterachse 13 definiert. Der elektrische Innenleiter 12 weist einen Leiterquerschnitt 14 auf. Der elektrische Innenleiter 12 ist von einer Primärisolation 15 umgeben. Die Primärisolation 15, welche den inneren Isolierungsmantel bzw. Innenmantel des Kabels 10 bildet, ist von einer Abschirmung 16 umhüllt, die hier beispielsweise als Schirmgeflecht 17 ausgeführt ist. Das hier gezeigte Schirmgeflecht 17 besteht beispielsweise aus einer Vielzahl an Litzen aus einem elektrisch leitenden Material. Die Abschirmung 16 umhüllt den elektrischen Innenleiter 12 und ist zwischen der Primärisolation 15 und einer Sekundärisolation 18 des elektrisch leitenden Kabels 10 verlaufend angeordnet. Die Sekundärisolation 18 bildet den äußeren Isolierungsmantel bzw. Außenmantel des Kabels 10.

Jedes der beiden in Fig. 1 gezeigten elektrisch leitenden Kabel 10 weist an seinem jeweiligen freien Ende ein sogenanntes kontaktiertes Kabelende 19 auf, an dem das jeweilige Kabel 10 an einer Kontaktstelle, beispielsweise einer Steckerschnittstelle, elektrisch leitend befestigt ist. An dem jeweiligen kontaktierten Kabelende 19 ist der entsprechende elektrische Innenleiter 12 freigelegt bzw. abisoliert.

Auf jedem elektrisch leitenden Kabel 10 ist ein auf der Primärisolation 15 des jeweiligen Kabels 10 angeordnetes Kontaktelement 20 angeordnet. Die in den Figuren 1 und 2 gezeigten Kontaktelemente 20 umfassen jeweils eine Innenhülse 21, welche als Stützhülse dient, um den in einer Kabeldurchführung innerhalb der Innenhülse 21 geführten elektrischen Innenleiter 12 samt der diesen umgebenden Primärisolation 15 vor Beschädigungen oder Verformungen zu schützen. Die Innenhülse 21 ist in einer Kontaktposition jeweils zwischen der Primärisolation 15 und der Abschirmung 16 positioniert und weist an ihrer Außenseite eine erste Kontaktoberfläche 22 auf, mit der die Abschirmung 16 des elektrisch leitenden Kabels 10 in der Kontaktposition kontaktiert ist.

Die in den Figuren 1 und 2 gezeigten Kontaktelemente 20 sind jeweils zweiteilig aufgebaut und weisen neben der Innenhülse 21 weiters eine dazu komplementäre Außenhülse 23 auf. In einer Kontaktposition ist die Innenhülse 21 zumindest teilweise innerhalb der Außenhülse 23 angeordnet, wobei die Außenhülse 23 eine zweite Kontaktoberfläche 24 aufweist. Die erste Kontaktoberfläche 22 der Innenhülse 21 und die zweite Kontaktoberfläche 24 der Außenhülse 23 sind bei einem solchen zweiteiligen Kontaktelement 20 derart ausgebildet, dass die Abschirmung 16 des elektrisch leitenden Kabels 10 in einer Kontaktposition zwischen der Innenhülse 21 und der Außenhülse 23 geklemmt und mit dem Kontaktelement 20 kontaktiert ist.

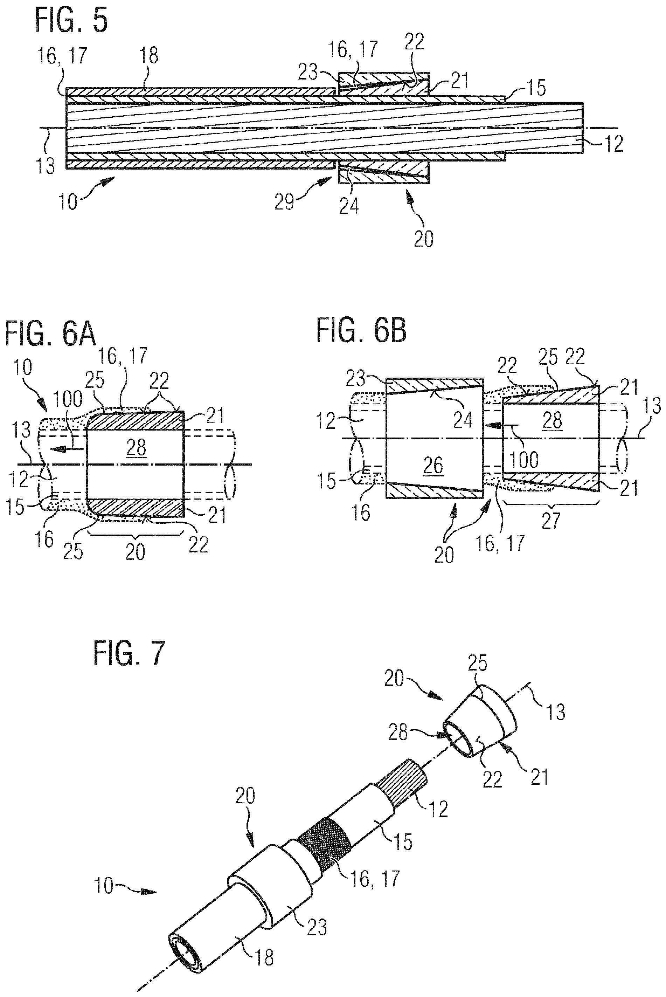

**Fig. 5** zeigt in einer Schnittansicht ein solches zweiteiliges Kontaktelement 20, welches in einer Kontaktposition 29 an einem elektrisch leitenden Kabel 10 angeordnet ist.

In den **Figuren 6A und 6B** sind jeweils in Schnittansichten unterschiedliche Ausführungen von Kontaktelementen 20 gezeigt.

**Fig. 6A** zeigt ein einteiliges Kontaktelement 20 in Form einer Innenhülse 21 bzw. Stützhülse. Die Innenhülse 21 ist so geformt, dass diese in einer Kontaktposition auf der Primärisolation 15 koaxial zu einer Leiterachse 13 eines hier nur strichliert angedeuteten elektrisch leitenden Kabels 10 positionierbar ist, und zwar zwischen der Primärisolation 15 und der Abschirmung 16,17 des betreffenden Kabels 10. An ihrer Außenseite weist die Innenhülse 21 eine erste Kontaktoberfläche 22 auf, mit der in der Kontaktposition die Abschirmung 16,17 des entsprechenden elektrisch leitenden Kabels 10 kontaktiert ist. Um die Innenhülse 21 zwischen die Primärisolation 15 und die Abschirmung 16,17 des betreffenden Kabels 10 in Pfeilrichtung 100 einschieben zu können, ohne dabei die Abschirmung 16,17 zu beschädigen, ist ein in Pfeilrichtung 100 gesehen vorderer Randabschnitt der Innenhülse 21 abgeschrägt, wobei die erste Kontaktoberfläche 22 an diesem vorderen Randabschnitt eine Knickkante 25 aufweist. Abgesehen von diesem abgeschrägten Randabschnitt verläuft die erste Kontaktoberfläche 22 der Innenhülse 21 im Wesentlichen parallel zur Innenseite der Innenhülse 21, welche zur Kabeldurchführung 28 dient. Oder in anderen Worten ist mit Ausnahme des abgeschrägten Randabschnittes die Materialdicke der Innenhülse 21 entlang der Leiterachse 13 des Kabels 10 gesehen im Wesentlichen gleich groß.

**Fig. 6B** zeigt das in Fig. 5 dargestellte zweiteilige Kontaktelement 20 mit einer Innenhülse 21 sowie einer dazu komplementären Außenhülse 23. Dieses zweiteilige Kontaktelement 20 entspricht den in den Figuren 1 und 2 gezeigten Kontaktelementen 20. Die Innenhülse 21 ist so geformt, dass sie in einer Kontaktposition koaxial 13 auf der Primärisolation 15 eines hier nur strichliert angedeuteten elektrisch leitenden Kabels 10 positionierbar ist, und zwar zwischen der Primärisolation 15 und der Abschirmung 16,17 des Kabels 10. In einer Kontaktposition 29 ist die Innenhülse 21 zumindest teilweise innerhalb der Außenhülse 23 angeordnet, wobei die Außenhülse 23 eine zweite Kontaktoberfläche 24 aufweist. Die erste Kontaktoberfläche 22 der Innenhülse 21 und die zweite Kontaktoberfläche 24 der Außenhülse 23 sind bei diesem zweiteiligen Kontaktelement 20 derart ausgebildet, dass die Abschirmung 16,17 des strichliert angedeuteten elektrisch leitenden Kabels 10 in der Kontaktposition 29, wie in Fig. 5 ersichtlich, zwischen der Innenhülse 21 und der Außenhülse 23 geklemmt und mit dem Kontaktelement 20 kontaktiert ist. Die Kontaktoberflächen 22,24 der Innenhülse 21 und der Außenhülse 23 sind zueinander korrespondierend ausgebildet, und können je nach Ausführung in Längsrichtung 11 des Kabels beispielsweise konisch, zylindrisch oder stufenförmig geformt sein, um die Klemmwirkung auf das zwischen der Innenhülse 21 und der Außenhülse 23 geklemmte Schirmgeflecht 17 der Abschirmung 16 zu erhöhen. Um die Innenhülse 21 zwischen die Primärisolation 15 und die Abschirmung 16,17 des betreffenden Kabels 10 in Pfeilrichtung 100 einschieben zu können, ohne dabei die Abschirmung 16,17 zu beschädigen, ist hier in Pfeilrichtung 100 gesehen die erste Kontaktoberfläche 22 konisch zulaufend geformt. Ein in Pfeilrichtung 100 gesehen vorderer, erster Abschnitt der erste Kontaktoberfläche 22 ist stärker geneigt unter Bildung einer zwischenliegenden Knickkante als ein in Pfeilrichtung 100 gesehen nachgelagerter, zweiter Abschnitt der ersten Kontaktoberfläche. Mit der Position 26 ist ein freies Einführvolumen 26 innerhalb der Außenhülse 23 bezeichnet, welches Einführvolumen 26 zur Aufnahme eines einführbaren Abschnitts 27 der Innenhülse 21 dient. Der innere freie Querschnitt der Innenhülse 27 dient wiederum als Kabeldurchführung 28 für den elektrischen Innenleiter 12 samt der diesen umgebenden Primärisolation 15.

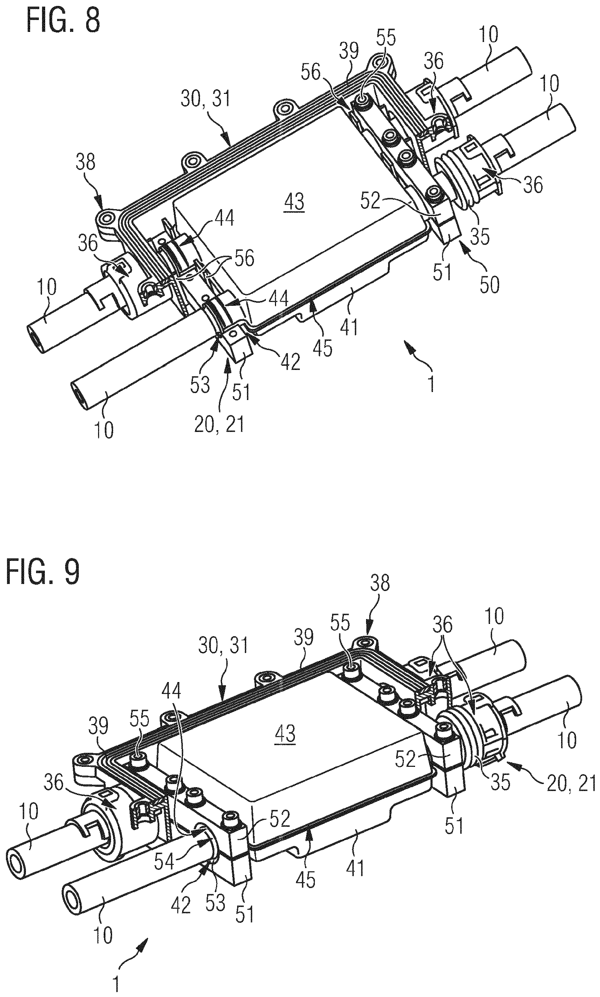

**Fig. 7** zeigt in einer axonometrischen Ansicht eine mit Fig. 5 vergleichbare Anordnung mit einem zweiteiligen Kontaktelement 20 in einer Zwischenposition. Das elektrisch leitende Kabel 10 ist bereits so konfektioniert, um an seinem abisolierten Kabelende an einer Kontaktstelle kontaktiert werden zu können. Die Außenhülse 23 und die Innenhülse 21 des Kontaktelements 20 müssen erst in geeigneter Weise entlang der Leiterachse 13 des elektrisch leitenden Kabels 10 in die in Fig. 9 gezeigte Kontaktposition 29 verschoben werden, und zwar so, dass die Abschirmung 16 des elektrisch leitenden Kabels 10 zwischen der Innenhülse 21 und der Außenhülse 23 geklemmt und mit dem Kontaktelement 20 kontaktiert ist.

Wieder zurückkommend zu den Figuren 1 und 2 umfasst das dargestellte Kontaktsystem 1 ein Verteilergehäuse 30, welches hier ein Verteilergehäuse 30 mit einem Unterteil 31 und einem Deckel 32 ist. Das Verteilergehäuse 30 weist an seiner in Fig. 1 gezeigten linken Gehäuseseite zumindest einen ersten Kabeleingang 33 und an seiner in Fig. 1 gezeigten rechten Gehäuseseite zumindest einen zweiten Kabeleingang 34 auf.

Die Kabeleingänge 33,34 in das Verteilergehäuse 30 sind jeweils mit einer Kabelabdichtung 35 abgedichtet. Die Kabelabdichtungen 35 mit Lamellendichtungen sind hier von außen geschützt innerhalb eines Fixierelements 36 angeordnet. Als Fixierelemente 36 für jedes angeschlossene elektrisch leitende Kabel 10 werden hier beispielsweise verrastbare Fixierelemente oder verschraubbare Fixierelemente, sogenannte Kabelverschraubungen, mit innenliegender Kabelabdichtung eingesetzt. Ebenso können beispielsweise verschraubbare Fixierelemente, sogenannte Kabelverschraubungen, zum Fixieren des jeweiligen Kabels 10 am Kabeleingang 33,34 mit dem Verteilergehäuse 30 eingesetzt werden. Die Fixierelemente 36 dienen einerseits zur Zugentlastung des jeweils angeschlossenen Kabels 10 sowie andererseits zur flüssigkeitsdichten Kabelabdichtung der Kabeleingänge 33,34 in das Verteilergehäuse 30.

Das in Fig. 1 veranschaulichte Verteilergehäuse 30 ist beispielsweise aus Kunststoff ausgeführt und ist hier so gestaltet, dass es flüssigkeitsdicht ausgeführt ist, jedoch keine EMV-Schirmungswirkung hat. In verschlossener Position mit auf dem Unterteil 31 des Verteilergehäuses 30 aufgesetztem Deckel 32 umschließt das Verteilergehäuse 30 somit einen flüssigkeitsdichten Gehäuseinnenraum 37. Zum Abdichten der Gehäuseteile kann beispielsweise der Deckel 32 mittels Gehäuseverschraubungen 38 sowie mittels einer zwischen dem Deckel 32 und dem Unterteil 31 angeordneten Gehäusedichtung 39 mit dem Unterteil 31 verschraubt werden.

Im Gehäuseinnenraum 37 des Verteilergehäuses 30 ist weiters ein Schirmgehäuse 40 mit einer unteren Schirmgehäuseschale 41 sowie mit einer oberen Schirmgehäuseschale 43 vorgesehen.

Innerhalb des Schirmgehäuses 40 ist eine Kontaktstelle 48, beispielsweise eine Steckerschnittstelle, angeordnet, an der die zumindest zwei elektrisch leitenden Kabel 10 angeschlossen sind.

Das Schirmgehäuse 40 ist hier beispielsweise aus einem elektrisch leitfähigen Metallblech hergestellt, bewirkt die EMV-Schirmung und ist so beschaffen, dass in Einbaulage die Kontaktstelle 48 sowie die daran befestigten kontaktierten Kabelenden 19 des elektrisch leitenden Kabels 10 vom Schirmgehäuse 40 umhüllt sind. Um eine durchgehende, unterbrechungsfreie bzw. EMV-dichte Schirmung auch im Bereich der Kabeldurchführungen 33,34 durch das Schirmgehäuse 40 zu gewährleisten, sind Endabschnitte 42 der unteren Schirmgehäuseschale 41 sowie Endabschnitte 44 der oberen Schirmgehäuseschale 43 jeweils so gestaltet, dass diese bei der hier in den Figuren 1 und 2 gezeigten Ausführung von zweiteiligen Kontaktelementen 20 jeweils an den Kontaktelementen 20 anliegen bzw. die Kontaktelemente 20 zumindest teilweise umhüllen.

Das Schirmgehäuse 40 ist hier so ausgeführt, dass zwischen der unteren Schirmgehäuseschale 41 und der oberen Schirmgehäuseschale 43 ein umlaufender EMV-Dichtungsrand 45 vorgesehen ist, um das Schirmgehäuse 40 EMV-dicht, also mit durchgehender, unterbrechungsfreier elektromagnetischer Schirmung verschließen zu können. Der EMV-Dichtungsrand 45 ist hier beispielsweise als umlaufender Bördelrand ausgeführt, sodass die Bördelung des Schirmgehäuses 40 entlang der gesamten komplementär geformten Randabschnitte der unteren 41 und der oberen 43 Schirmgehäuseschale verläuft und die beiden Schirmgehäuseschalen 41,43 an ihren Randabschnitten bündig zusammengefügt bzw. zusammengesteckt werden können. Beispielsweise ist dazu am Rand der unteren Schirmgehäuseschale 41 eine umlaufende Fuge vorgesehen, in welche Fuge der komplementär geformte Rand der oberen Schirmgehäuseschale 43 formschlüssig einsteckbar ist, sodass bei geschlossenem Schirmgehäuse 40 keine Ritzen, Spalten oder Öffnungen im Schirmgehäuse 40 vorhanden sind, welche die EMV-Schirmungswirkung des Schirmgehäuses 40 beeinträchtigen könnten. In Einbaulage schließen die untere und obere Schirmgehäuseschale 41,42 den Innenraum des Schirmgehäuses 40 EMV-dicht schirmend ab.

Außerdem sind bei der in Fig. 1 gezeigten Ausführung des Kontaktsystems 1 zwei Klemmelemente 50 innerhalb des Verteilergehäuses 50 angeordnet.

Ein erstes Klemmelement 50, das in der linken Bildhälfte von Fig. 1 gezeigt ist, ist dabei dem linken Kontaktelement 20 zugeordnet. Das linke Kontaktelement 20 ist im Gehäuseinnenraum 37 zwischen dem ersten Kabeleingang 33 und der Kontaktstelle 48 angeordnet.

Ein zweites Klemmelement 50, das in der rechten Bildhälfte von Fig. 1 gezeigt ist, ist dabei dem rechten Kontaktelement 20 zugeordnet. Das rechte Kontaktelement 20 ist im Gehäuseinnenraum 37 zwischen dem zweiten Kabeleingang 34 und der Kontaktstelle 48 angeordnet.

Die zwei in Fig. 1 ersichtlichen Kontaktelemente 20 sind jeweils so positioniert, dass diese jeweils von den Endabschnitten 42,44 der Schirmgehäuseschalen 41,43 des Schirmgehäuses 40 zumindest teilweise umhüllt werden und mit ihren Außenhülsen 23 in einer Kontaktposition 29 am Schirmgehäuse 40 anliegen.

Jedes Klemmelement 50 weist eine erste Klemmbacke 51 und eine zweite Klemmbacke 52 auf, die zur Klemmung jeweils eines Kontaktelements 20 sowie von entsprechenden Endabschnitten 42 der unteren Schirmgehäuseschale 41 und von Endabschnitten 44 der oberen Schirmgehäuseschale 43 des Schirmgehäuses 40 vorgesehen sind.

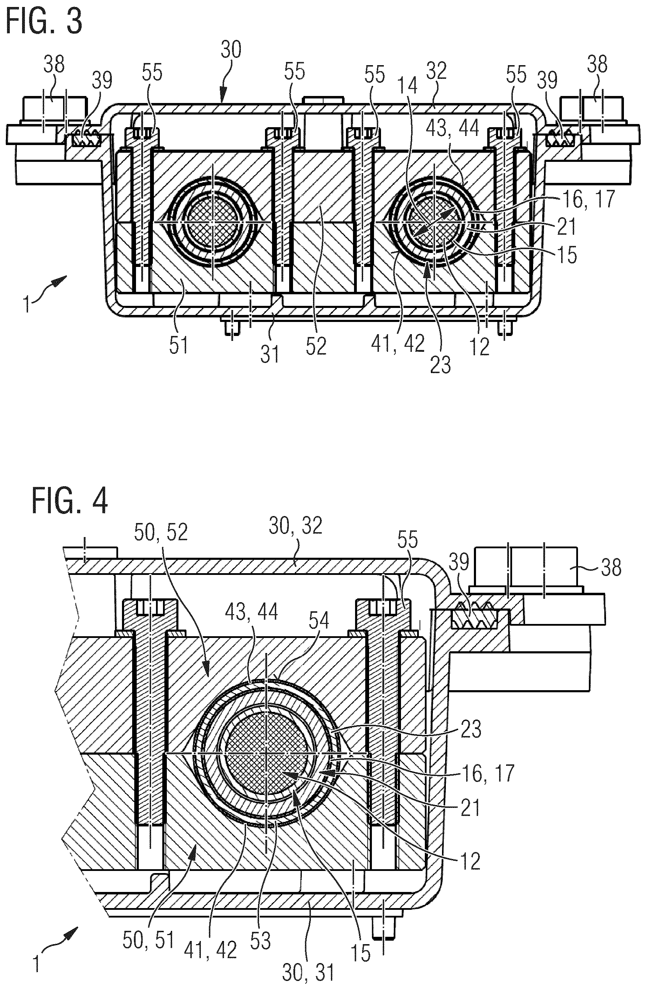

Wie in **Fig. 3** sowie in der Detailansicht von **Fig. 4** ersichtlich, die ein gemeinsames Klemmelement 50 mit zwei Klemmbacken 51,52 für zwei nebeneinander angeordnete Kabel 10 zeigen, weisen die erste Klemmbacke 51 sowie die zweite Klemmbacke 52 jedes Klemmelements 50 jeweils eine Ausnehmung 53,54 pro Kabel 10 auf, wobei die Ausnehmungen 53 in der ersten Klemmbacke 51 und die Ausnehmungen 54 in der zweiten Klemmbacke 52 jeweils komplementär geformt sind zu den Endabschnitten 42,44 der Schirmgehäuseschalen 41,43 des Schirmgehäuses 40. Die beiden Klemmbacken 51,52 sind hier mit entsprechenden Schraubverbindungen 55 bzw. Verschraubungen 55 kraftschlüssig miteinander verbunden. Entsprechende Gehäuseführungen 56 innerhalb des Verteilergehäuses 30 dienen zur Positionierung der Klemmelemente 50 in Einbaulage im Verteilergehäuse 30.

Wie im Schnitt in der Detailansicht von Fig. 4 ersichtlich, ist beim hier gezeigten Einsatz eines zweiteiligen Kontaktelements 20 folgende Abfolge bei der Klemmung innerhalb des Klemmelements 50 realisiert: Von unten nach oben beginnend ist zu unterst die untere bzw. erste Klemmbacke 51 angeordnet. Innerhalb der etwa halbkreisförmigen Ausnehmung 53 in der ersten Klemmbacke 51 anliegend befindet sich ein Endabschnitt 42 der unteren Schirmgehäuseschale 41, welcher Endabschnitt 42 mit seiner Außenseite an der ersten Klemmbacke 51 anliegt. An der der Außenseite gegenüberliegenden Innenseite des Endabschnitts 42 der unteren Schirmgehäuseschale 41 liegt eine Außenhülse 23 des Kontaktelements 20 an. Zwischen der Außenhülse 23 und einer Innenhülse 21 des Kontaktelements 20 befindet sich die Abschirmung 16 des geklemmten elektrisch leitenden Kabels 10, beispielsweise in Form eines Schirmgeflechts 17. Die Abschirmung 16 ist in Kontaktposition 29 zwischen der Außenhülse 23 und der Innenhülse 21 geklemmt und steht in einem direkten elektrisch leitenden Kontakt mit dem Kontaktelement 20. Die Innenhülse 21 ist zwischen der Primärisolation 15 und der Abschirmung 16 des betreffenden Kabels 10 positioniert. Innerhalb der Innenhülse 21 befinden sich die Primärisolation sowie der elektrische Innenleiter 12 des betreffenden Kabels 10.

Von der Leiterachse 13 des Kabels 10 weiter nach oben ergibt sich damit die Abfolge der vorstehend genannten Lagen bzw. Komponenten in umgekehrter Reihenfolge: An der Oberseite der Außenhülse 23 des Kontaktelements 20 liegt eine Innenseite eines Endabschnitts 44 der oberen Schirmgehäuseschale 43 an. An der der Innenseite gegenüberliegenden Außenseite des betreffenden Endabschnitts 44 der oberen Schirmgehäuseschale 43 befindet sich die obere, zweite Klemmbacke 52. Der Endabschnitt 44 der oberen Schirmgehäuseschale 43 ist dazu innerhalb der etwa halbkreisförmigen Ausnehmung 54 der zweiten Klemmbacke 52 positioniert und liegt an der zweiten Klemmbacke 52 an. Das Schirmgehäuse 40 liegt in diesem Fall am Kontaktelement 20 an, und zwar so, dass es von den beiden Klemmbacken 51,52 des Klemmelements 50 angepresst wird und das Kontaktelement 20 zumindest teilweise umhüllt. Das Schirmgehäuse 40 kontaktiert die Abschirmung 16 des betreffenden elektrisch leitenden Kabels 10 zumindest indirekt.

Für den Fall, dass anstelle des hier in den Figuren 3 und 4 veranschaulichten zweiteiligen Kontaktelements 20 ein einteiliges Kontaktelement 20, welches beispielsweise in Fig. 6A dargestellt ist und welches nur aus einer Innenhülse 21 besteht, eingesetzt wird, so ändert sich bei der Abfolge bei der Klemmung innerhalb des Klemmelements 50 bloß folgendes gegenüber der zuvor beschriebenen Abfolge gemäß Fig. 4:
Aufgrund der fehlenden Außenhülse 23 ist in diesem Fall die Abschirmung 16,17 des betreffenden Kabels 10 zwischen der Innenhülse 21 als Kontaktelement 20 und den entsprechenden Endabschnitten 42,44 der unteren sowie der oberen Schirmgehäuseschalen 41,43 des Schirmgehäuses 40 geklemmt. Das Schirmgehäuse 40 ist somit am Kontaktelement 20 in Form der Innenhülse 21 und/oder an der Abschirmung 16 des betreffenden Kabels 10 anliegend angepresst. Die Abschirmung 16 des betreffenden Kabels 10 wird in diesem Fall vom Schirmgehäuse 40 zumindest indirekt kontaktiert, vorzugsweise jedoch zumindest teilweise auch direkt kontaktiert.

Zusammenfassend dient das Verteilergehäuse 30 im Wesentlichen zur Halterung des Schirmgehäuses 40, des zumindest einen Klemmelements 50 sowie der zumindest einen Kontaktstelle 48, die innerhalb des Verteilergehäuses 30 angeordnet sind. Das Verteilergehäuse 30 an sich kann aus beliebigen Materialien gefertigt sein und muss für sich genommen weder flüssigkeitsdicht ausgeführt sein, noch EMV-Schirmungswirkung haben. Das Schirmgehäuse 40 bewirkt die EMV-Schirmung.

**Fig. 8** betrifft ein zweites Ausführungsbeispiel eines Kontaktsystems 1 gemäß der Erfindung und zeigt schräg von oben ein teilweise freigeschnittenes Verteilergehäuse 30 mit abgenommenem Deckel 32, weshalb der Blick in den Gehäuseinnenraum 37 freigegeben ist.

**Fig. 9** zeigt das in Fig. 8 veranschaulichte Kontaktsystem schräg von der Seite. Die folgende Beschreibung betrifft die beiden Figuren 8 und 9 gleichermaßen, wobei gleiche Bezugszeichen wie in den Figuren zuvor für funktionsgleiche Bauteile und Komponenten verwendet werden.

Das Verteilergehäuse 30 ist beispielsweise aus Kunststoff ausgeführt und ist hier so gestaltet, dass es flüssigkeitsdicht ausgeführt ist. Dazu ist am Unterteil 31 eine Gehäusedichtung 39 vorgesehen und der hier nicht gezeigte Deckel 32 des Verteilergehäuses 30 kann mit dem Unterteil 31 mittels Gehäuseverschraubungen 38 verschraubt werden.

Im Gehäuseinnenraum 37 des Verteilergehäuses 30 ist das Schirmgehäuse 40 mit einer unteren Schirmgehäuseschale 41 sowie mit einer oberen Schirmgehäuseschale 43 angeordnet.

Innerhalb des Schirmgehäuses 40 sind entsprechende Kontaktstellen 48 angeordnet, an der die jeweils zwei elektrisch leitenden Kabel 10, die von einander gegenüberliegenden Seiten des Verteilergehäuses 30 durch Kabeleingänge 33,34 in das Verteilergehäuse 30 geführt werden, angeschlossen sind.

Das Schirmgehäuse 40 ist hier wiederum aus einem elektrisch leitfähigen Metallblech hergestellt, bewirkt die EMV-Schirmung und ist so beschaffen, dass in Einbaulage die Kontaktstelle 48 sowie die daran befestigten kontaktierten Kabelenden 19 des elektrisch leitenden Kabels 10 vom Schirmgehäuse 40 umhüllt sind. Um eine EMV-dichte Schirmung auch im Bereich der Kabeldurchführungen 33,34 durch das Schirmgehäuse 40 zu gewährleisten, sind Endabschnitte 42 der unteren Schirmgehäuseschale 41 sowie Endabschnitte 44 der oberen Schirmgehäuseschale 43 jeweils so gestaltet, dass diese bei der hier in den Figuren 8 und 9 gezeigten Ausführung, bei der jeweils einteilige Kontaktelemente 20 in Form einer Innenhülse 21 bzw. Stützhülse eingesetzt werden, jeweils an den Kontaktelementen 20 und/oder an der Abschirmung 16 des jeweiligen Kabels 10 anliegen. Die Endabschnitte 42,44 des Schirmgehäuses 40 umhüllen in Kontaktposition zumindest teilweise die Kontaktelemente 20 oder die Abschirmungen 16 jedes der vier Kabel 10.

Das Schirmgehäuse 40 weist zwischen der unteren Schirmgehäuseschale 41 und der oberen Schirmgehäuseschale 43 einen umlaufenden EMV-Dichtungsrand 45 auf, um das Schirmgehäuse 40 durchgehend unterbrechungsfrei bzw. EMV-dicht schirmend verschließen zu können. Der EMV-Dichtungsrand 45 ist hier als umlaufender Bördelrand ausgeführt, sodass die Bördelung des Schirmgehäuses 40 entlang der gesamten komplementär geformten Randabschnitte der unteren 41 und der oberen 43 Schirmgehäuseschale verläuft und die beiden Schirmgehäuseschalen 41,43 an ihren Randabschnitten bündig zusammengefügt bzw. zusammengesteckt werden können. Entlang des Bördelrands der unteren Schirmgehäuseschale 41 ist dazu eine umlaufende Fuge vorgesehen, in welche Fuge der komplementär geformte Rand der oberen Schirmgehäuseschale 43 formschlüssig einsteckbar ist. In Einbaulage schließen die untere und obere Schirmgehäuseschale 41,42 den Innenraum des Schirmgehäuses 40 EMV-dicht ab.

Vergleichbar mit den Figuren 3 und 4 sind hier zwei Klemmelemente 50 innerhalb des Verteilergehäuses 50 angeordnet, welche Klemmelemente 50 jeweils ein gemeinsames Klemmelement 50 mit zwei Klemmbacken 51,52 für zwei nebeneinander angeordnete Kabel 10 bilden. Das erste Klemmelement 50, das im Bildvordergrund der Figuren 8 und 9 gezeigt ist, ist den Kontaktelementen 20 der beiden vorderen Kabel 10 zugeordnet. Das zweite Klemmelement 50, das im Bildhintergrund der Figuren 8 und 9 gezeigt ist, ist dabei den Kontaktelementen 20 der beiden hinteren Kabel 10 zugeordnet.

Die Kabeleingänge 33,34 in das Verteilergehäuse 30 sind jeweils mit Kabelabdichtungen 35 abgedichtet. Die Kabelabdichtungen 35 mit Lamellendichtungen sind hier von außen geschützt innerhalb eines Fixierelements 36 angeordnet. Als Fixierelemente 36 für jedes angeschlossene elektrisch leitende Kabel 10 werden hier verrastbare Fixierelemente mit innenliegender Kabelabdichtung eingesetzt.

Das erfindungsgemäße Kontaktsystem 1 bietet den Vorteil, dass durch die Klemmung der Klemmelemente 50, welche das Schirmgehäuse 40 mit den jeweiligen Kontaktelementen 20 oder Abschirmungen 16 der betreffenden Kabel 10 miteinander verpressen, eine zuverlässige, unterbrechungsfreie EMV-Schirmung in Längsrichtung der elektrisch leitenden Kabel 10 insbesondere im Bereich der Kabeldurchführungen 33,34 in das Verteilergehäuse gewährleistet ist.

### BEZUGSZEICHENLISTE

- 1: Kontaktsystem
- 10: elektrisch leitendes Kabel
- 11: Längsrichtung des Kabels (Doppelpfeil)
- 12: elektrischer Innenleiter
- 13: Leiterachse
- 14: Leiterquerschnitt
- 15: Primärisolation; Innenmantel des Kabels
- 16: Abschirmung
- 17: Schirmgeflecht
- 18: Sekundärisolation; Außenmantel des Kabels
- 19: kontaktiertes Kabelende
- 20: Kontaktelement
- 21: Innenhülse; Stützhülse
- 22: erste Kontaktoberfläche
- 23: Außenhülse
- 24: zweite Kontaktoberfläche
- 25: Knickkante
- 26: Einführvolumen der Außenhülse
- 27: einführbarer Abschnitt der Innenhülse
- 28: Kabeldurchführung
- 29: Kontaktposition
- 30: Verteilergehäuse
- 31: Unterteil des Verteilergehäuses
- 32: Deckel des Verteilergehäuses
- 33: (erster) Kabeleingang
- 34: (zweiter bzw. weiterer) Kabeleingang
- 35: Kabelabdichtung
- 36: Fixierelement; Verschlusselement
- 37: Gehäuseinnenraum
- 38: Gehäuseverschraubung
- 39: Gehäusedichtung des Verteilergehäuses
- 40: Schirmgehäuse
- 41: untere Schirmgehäuseschale
- 42: Endabschnitt der unteren Schirmgehäuseschale
- 43: obere Schirmgehäuseschale
- 44: Endabschnitt der oberen Schirmgehäuseschale
- 45: EMV-Dichtungsrand der Schirmgehäuseschalen
- 48: Kontaktstelle
- 50: Klemmelement
- 51: erste Klemmbacke
- 52: zweite Klemmbacke
- 53: Ausnehmung in der ersten Klemmbacke
- 54: Ausnehmung in der zweiten Klemmbacke
- 55: Schraubverbindung, Verschraubung
- 56: Gehäuseführung für Klemmelement
- 100: Pfeilrichtung zum Positionieren der Innenhülse

## Patentansprüche

1. Kontaktsystem (1) zur elektrischen Kontaktierung einer Abschirmung (16) eines elektrisch leitenden Kabels (10) in einem Verteilergehäuse (30), umfassend
- ein Verteilergehäuse (30) mit zumindest einem Kabeleingang (33,34) zur Ein- und/oder Durchführung mindestens eines elektrisch leitenden Kabels (10) in einen Gehäuseinnenraum (37) des Verteilergehäuses (30), wobei im Gehäuseinnenraum (37) zumindest eine Kontaktstelle (48) angeordnet ist;
- zumindest ein elektrisch leitendes Kabel (10) mit einem elektrischen Innenleiter (12), einer den elektrischen Innenleiter (12) umgebenden Primärisolation (15), einer die Primärisolation (15) umgebenden Sekundärisolation (18), sowie mit einer Abschirmung (16), welche Abschirmung (16) den elektrischen Innenleiter (12) umhüllt und zwischen der Primärisolation (15) und der Sekundärisolation (18) des elektrisch leitenden Kabels (10) verlaufend angeordnet ist;
- zumindest ein auf der Primärisolation (15) des zumindest einen elektrisch leitenden Kabels (10) angeordnetes Kontaktelement (20), welches Kontaktelement (20) eine Innenhülse (21) umfasst, wobei die Innenhülse (21) in einer Kontaktposition (29) zwischen der Primärisolation (15) und der Abschirmung (16) positioniert ist und eine erste Kontaktoberfläche (22) der Innenhülse (21) die Abschirmung (16) des elektrisch leitenden Kabels (10) kontaktiert;
**dadurch gekennzeichnet, dass**
- das zumindest eine elektrisch leitende Kabel (10) durch den zumindest einen Kabeleingang (33) des Verteilergehäuses (30) durchgeführt und mit einem abisolierten, kontaktierten Kabelende (19) seines elektrischen Innenleiters (12) an der zumindest einen Kontaktstelle (48) elektrisch leitend befestigt ist, wobei das zumindest eine Kontaktelement (20) im Gehäuseinnenraum (37)zwischen dem Kabeleingang (33) und der Kontaktstelle (48) angeordnet ist, und wobei
- ein, vorzugsweise zweiteiliges, Schirmgehäuse (40) mit einer unteren Schirmgehäuseschale (41) und mit einer oberen Schirmgehäuseschale (43) innerhalb des Verteilergehäuses (30) angeordnet ist, sowie weiters
- zumindest ein Klemmelement (50) innerhalb des Verteilergehäuses (30) angeordnet ist, welches Klemmelement (50) eine erste Klemmbacke (51) und eine zweite Klemmbacke (52) zur Klemmung des zumindest einen Kontaktelements (20) sowie von Endabschnitten (42,44) der Schirmgehäuseschalen (41,43) umfasst, wobei
- das Schirmgehäuse (40) die Kontaktstelle (48) sowie das daran befestigte kontaktierte Kabelende (19) des elektrisch leitenden Kabels (10) umhüllt, und wobei ein Endabschnitt (42) der unteren Schirmgehäuseschale (41) sowie ein Endabschnitt (44) der oberen Schirmgehäuseschale (43) jeweils zwischen dem zumindest einen Kontaktelement (20) und den beiden Klemmbacken (51,52) des zumindest einen Klemmelements (50) festgeklemmt sind, sodass das Schirmgehäuse (40) am Kontaktelement (20) oder der Abschirmung (16) anliegend sowie das Kontaktelement (20) oder die Abschirmung (16) zumindest teilweise umhüllend angepresst ist und dabei die Abschirmung (16) des zumindest einen elektrisch leitenden Kabels (10) zumindest indirekt kontaktiert.

2. Kontaktsystem (1) nach Anspruch 1, **dadurch gekennzeichnet, dass** das zumindest eine Kontaktelement (20) die Innenhülse (21) ist.

3. Kontaktsystem (1) nach Anspruch 1, **dadurch gekennzeichnet, dass** das zumindest eine Kontaktelement (20) weiterhin eine Außenhülse (23) umfasst, wobei in der Kontaktposition (29) die Innenhülse (21) zumindest teilweise innerhalb der Außenhülse (23) angeordnet ist, wobei die Außenhülse (23) eine zweite Kontaktoberfläche (24) aufweist, und wobei die erste Kontaktoberfläche (22) der Innenhülse (21) und die zweite Kontaktoberfläche (24) der Außenhülse (23) derart ausgebildet sind, dass die Abschirmung (16) des elektrisch leitenden Kabels (10) in einer Kontaktposition (29) zwischen der Innenhülse (21) und der Außenhülse (23) geklemmt und mit dem Kontaktelement (20) kontaktiert ist, wobei das Schirmgehäuse (40) am Kontaktelement (20), vorzugsweise an der Außenhülse (23) des Kontaktelements (20), anliegend sowie das Kontaktelement (20) zumindest teilweise umhüllend angepresst ist und dabei die Abschirmung (16) des zumindest einen elektrisch leitenden Kabels (10) zumindest indirekt kontaktiert.

4. Kontaktsystem (1) nach einem der Ansprüche 1 bis 3, **dadurch gekennzeichnet, dass** das zumindest eine Klemmelement (50) in seiner Einbaulage in einer Gehäuseführung (56) innerhalb des Verteilergehäuses (30) positioniert ist.

5. Kontaktsystem (1) nach einem der Ansprüche 1 bis 4, **dadurch gekennzeichnet, dass** das zumindest eine Klemmelement (50) so ausgeführt ist, dass die beiden Klemmbacken (51,52) formschlüssig oder kraftschlüssig, vorzugsweise mittels Schraubverbindungen (55), Steckverbindungen und/oder Rastverbindungen, miteinander verbindbar sind.

6. Kontaktsystem (1) nach einem der Ansprüche 1 bis 5, **dadurch gekennzeichnet, dass** die erste Klemmbacke (51) sowie die zweite Klemmbacke (52) jeweils zumindest eine Ausnehmung (53,54) aufweisen, wobei die zumindest zwei Ausnehmungen (53,54) jeweils komplementär geformt sind zu den Endabschnitten (42,44) der Schirmgehäuseschalen (41,43) des Schirmgehäuses (40).

7. Kontaktsystem (1) nach einem der Ansprüche 1 bis 6, **dadurch gekennzeichnet, dass** das Schirmgehäuse (40) zwischen der unteren Schirmgehäuseschale (41) und der oberen Schirmgehäuseschale (43) einen, vorzugsweise umlaufenden, EMV-Dichtungsrand (45) aufweist und eine durchgehende, unterbrechungsfreie elektromagnetische Schirmung bildet.

8. Kontaktsystem (1) nach einem der Ansprüche 1 bis 7, **dadurch gekennzeichnet, dass** das Schirmgehäuse (40) aus einem elektrisch leitfähigen Material hergestellt ist.

9. Kontaktsystem (1) nach einem der Ansprüche 1 bis 8, **dadurch gekennzeichnet, dass** das Verteilergehäuse (30) einen Gehäuseunterteil (31) sowie einen Gehäusedeckel (32) umfasst, wobei der Gehäuseunterteil (31) und der Gehäusedeckel (32) den Gehäuseinnenraum (37), vorzugsweise mit einer zwischen dem Gehäuseunterteil (31) und dem Gehäusedeckel angeordneten (32)Gehäusedichtung (39), dicht umschließen.

10. Kontaktsystem (1) nach einem der Ansprüche 1 bis 9, **dadurch gekennzeichnet, dass** das Verteilergehäuse (30) aus Kunststoff gefertigt ist.

11. Kontaktsystem (1) nach einem der Ansprüche 1 bis 10, **dadurch gekennzeichnet, dass** das zumindest eine elektrisch leitende Kabel (10) mit einem Fixierelement (36), gegebenenfalls unter Verwendung eines Kabelbinders, am zumindest einen Kabeleingang (33,34) in das Verteilergehäuse (30) fixiert ist.

12. Kontaktsystem (1) nach einem der Ansprüche 1 bis 11, **dadurch gekennzeichnet, dass** der zumindest eine Kabeleingang (33,34) in das Verteilergehäuse (30) mit einer Kabelabdichtung (35) und/oder mit einem Fixierelement (36) abgedichtet ist.

13. Kontaktsystem (1) nach einem der Ansprüche 1 bis 12, **dadurch gekennzeichnet, dass** im Verteilergehäuse (30) zusätzlich zu einem ersten Kabeleingang (33) zumindest ein zweiter oder weiterer Kabeleingang (34) an derselben Gehäuseseite und/oder an einer vom ersten Kabeleingang (33) unterschiedlichen Gehäuseseite des Verteilergehäuses (30) angeordnet ist, wobei der erste Kabeleingang (33) und der zumindest eine zweite oder weitere Kabeleingang (34) wahlweise entweder mit einem gemeinsamem Klemmelement (50) oder jeweils mit separaten Klemmelementen (50) versehen ist bzw. sind.

14. Kontaktsystem (1) nach einem der Ansprüche 1 bis 13, **dadurch gekennzeichnet, dass** die erste (51) und zweite (52) Klemmbacke des zumindest einen Klemmelements (50) aus Metall oder einer Metalllegierung gefertigt sind.

15. Kontaktsystem (1) nach einem der Ansprüche 1 bis 13, **dadurch gekennzeichnet, dass** die erste (51) und zweite (52) Klemmbacke des zumindest einen Klemmelements (50) aus Kunststoff gefertigt sind.

## Claims

1. Contact system (1) for electrically contacting a shield (16) of an electrically conductive cable (10) in a distribution housing (30), comprising
- a distribution housing (30) having at least one cable entry (33, 34) for feeding at least one electrically conductive cable (10) into and/or through a housing interior (37) of the distribution housing (30), wherein at least one contact point (48) is arranged in the housing interior (37);
- at least one electrically conductive cable (10) having an electrical inner conductor (12), a primary insulation (15) surrounding the electrical inner conductor (12), a secondary insulation (18) surrounding the primary insulation (15), and a shield (16), which shield (16) envelops the electrical inner conductor (12) and is arranged to extend between the primary insulation (15) and the secondary insulation (18) of the electrically conductive cable (10);
- at least one contact element (20) arranged on the primary insulation (15) of the at least one electrically conductive cable (10), which contact element (20) comprises an inner sleeve (21), wherein the inner sleeve (21) is positioned in a contact position (29) between the primary insulation (15) and the shield (16), and a first contact surface (22) of the inner sleeve (21) contacts the shield (16) of the electrically conductive cable (10);
**characterized in that**
- the at least one electrically conductive cable (10) is fed through the at least one cable entry (33) of the distribution housing (30) and is electrically conductively attached with a stripped, contacted cable end (19) of its electrical inner conductor (12) to the at least one contact point (48), wherein the at least one contact element (20) is arranged in the housing interior (37) between the cable entry (33) and the contact point (48), and wherein
- a preferably two-part shield housing (40) with a lower shield housing shell (41) and an upper shield housing shell (43) is arranged inside the distribution housing (30), and furthermore
- at least one clamping element (50) is arranged inside the distribution housing (30), which clamping element (50) comprises a first clamping jaw (51) and a second clamping jaw (52) for clamping the at least one contact element (20) and end sections (42, 44) of the shield housing shells (41, 43), wherein
- the shield housing (40) encloses the contact point (48) and the contacted cable end (19) of the electrically conductive cable (10) attached thereto, and wherein an end section (42) of the lower shield housing shell (41) and an end section (44) of the upper shield housing shell (43) are each tightly clamped between the at least one contact element (20) and the two clamping jaws (51, 52) of the at least one clamping element (50), so that the shield housing (40) is pressed in an abutting manner against the contact element (20) or the shield (16) and the contact element (20) or the shield (16) is pressed in an at least partially enveloping manner, and thereby at least indirectly contacting the shield (16) of the at least one electrically conductive cable (10).

2. Contact system (1) according to claim 1, **characterized in that** the at least one contact element (20) is the inner sleeve (21).

3. Contact system (1) according to claim 1, **characterized in that** the at least one contact element (20) further comprises an outer sleeve (23), wherein, in the contact position (29), the inner sleeve (21) is at least partially arranged within the outer sleeve (23), wherein the outer sleeve (23) has a second contact surface (24), and wherein the first contact surface (22) of the inner sleeve (21) and the second contact surface (24) of the outer sleeve (23) are designed such that the shield (16) of the electrically conductive cable (10) is clamped in a contact position (29) between the inner sleeve (21) and the outer sleeve (23) and is contacted by the contact element (20), wherein the shield housing (40) is pressed in an abutting manner against the contact element (20), preferably against the outer sleeve (23) of the contact element (20), and the contact element (20) is pressed in an at least partially enveloping manner, and thereby at least indirectly contacting the shield (16) of the at least one electrically conductive cable (10).

4. Contact system (1) according to one of claims 1 to 3, **characterized in that** the at least one clamping element (50) is positioned in its installation position in a housing guide (56) within the distribution housing (30).

5. Contact system (1) according to one of claims 1 to 4, **characterized in that** the at least one clamping element (50) is designed such that the two clamping jaws (51, 52) can be connected to each other in a form-fitting or force-fitting manner, preferably by means of screw connections (55), plug connections, and/or snap connections.

6. Contact system (1) according to one of claims 1 to 5, **characterized in that** the first clamping jaw (51) and the second clamping jaw (52) each have at least one recess (53, 54), wherein the at least two recesses (53, 54) are each shaped to be complementary to the end sections (42, 44) of the shield housing shells (41, 43) of the shield housing (40).

7. Contact system (1) according to one of claims 1 to 6, **characterized in that** the shield housing (40) has a preferably circumferential EMC sealing edge (45) between the lower shield housing shell (41) and the upper shield housing shell (43) and forms a continuous, uninterrupted electromagnetic shield.

8. Contact system (1) according to one of claims 1 to 7, **characterized in that** the shield housing (40) is made of an electrically conductive material.

9. Contact system (1) according to one of claims 1 to 8, **characterized in that** the distribution housing (30) comprises a housing lower part (31) and a housing cover (32), wherein the housing lower part (31) and the housing cover (32) tightly enclose the housing interior (37), preferably with a housing seal (39) arranged between the housing lower part (31) and the housing cover (32).

10. Contact system (1) according to one of claims 1 to 9, **characterized in that** the distribution housing (30) is made of plastic.

11. Contact system (1) according to one of claims 1 to 10, **characterized in that** the at least one electrically conductive cable (10) is fixed to the at least one cable entry (33, 34) in the distribution housing (30) with a fixing element (36), optionally using a cable tie.

12. Contact system (1) according to one of claims 1 to 11, **characterized in that** the at least one cable entry (33, 34) into the distribution housing (30) is sealed with a cable seal (35) and/or with a fixing element (36).

13. Contact system (1) according to one of claims 1 to 12, **characterized in that,** in addition to a first cable entry (33), at least one second or further cable entry (34) is arranged in the distribution housing (30) on the same housing side and/or on a housing side of the distribution housing (30) different from the first cable entry (33), wherein the first cable entry (33) and the at least one second or further cable entry (34) are optionally provided either with a common clamping element (50) or in each case with separate clamping elements (50).

14. Contact system (1) according to one of claims 1 to 13, **characterized in that** the first (51) and second (52) clamping jaws of the at least one clamping element (50) are made of metal or a metal alloy.

15. Contact system (1) according to one of claims 1 to 13, **characterized in that** the first (51) and second (52) clamping jaws of the at least one clamping element (50) are made of plastic.

## Revendications

1. Système de contact (1) pour la mise en contact électrique d'un blindage (16) d'un câble conducteur électrique (10) dans un boîtier de dérivation (30), comprenant
- un boîtier de dérivation (30) muni d'au moins une entrée de câbles (33, 34) pour l'insertion et/ou le passage d'au moins un câble conducteur électrique (10) dans un espace intérieur de boîtier (37) du boîtier de dérivation (30), un point de contact (48) étant disposé dans l'espace intérieur de boîtier (37) ;
- au moins un câble conducteur électrique (10) avec un conducteur électrique intérieur (12), une isolation primaire (15) entourant le conducteur électrique intérieur (12), une isolation secondaire (18) entourant l'isolation primaire (15), et avec un blindage (16), lequel blindage (16) enveloppe le conducteur électrique intérieur (12) et est disposé entre l'isolation primaire (15) et l'isolation secondaire (18) du câble conducteur électrique (10) ;
- au moins un élément de contact (20) disposé sur l'isolation primaire (15) de l'au moins un câble conducteur électrique (10), lequel élément de contact (20) comprend une gaine intérieure (21), la gaine intérieure (21) étant placée dans une position de contact (29) entre l'isolation primaire (15) et le blindage (16) et une première surface de contact (22) de la gaine intérieure (21) venant en contact avec le blindage (16) du câble conducteur électrique (10),
**caractérisé en ce que**
- l'au moins un câble conducteur électrique (10) est passé à travers l'au moins une entrée de câbles (33) du boîtier de dérivation (30) et fixé de façon conductrice électrique sur l'au moins un point de contact (48) par une extrémité de câble (19) dénudée et mise en contact de son conducteur électrique intérieur (12), l'au moins un élément de contact (20) étant disposé dans l'espace intérieur de boîtier (37) entre l'entrée de câbles (33) et le point de contact (48) et
- un boîtier blindé (40), de préférence en deux parties, avec une coque de boîtier blindé inférieure (41) et une coque de boîtier blindé supérieure (43), étant disposé à l'intérieur du boîtier de dérivation (30),
- au moins un élément de serrage (50) étant en outre disposé à l'intérieur du boîtier de dérivation (30), lequel élément de serrage (50) comprend un premier mors de serrage (51) et un deuxième mors de serrage (52) pour serrer l'au moins un élément de contact (20) ainsi que des parties d'extrémité (42, 44) des coques de boîtier blindé (41,43),
- le boîtier blindé (40) enveloppant le point de contact (48) et l'extrémité de câble (19) du câble conducteur électrique (10) qui y est fixée, et une partie d'extrémité (42) de la coque de boîtier blindé inférieure (41) et une partie d'extrémité (44) de la coque de boîtier blindé supérieure (43) étant serrées chacune entre l'au moins un élément de contact (20) et les deux mors de serrage (51,52) de l'au moins un élément de serrage (50), de sorte que le boîtier blindé (40) est pressé de façon à reposer sur l'élément de contact (20) ou le blindage (16) et à venir en contact avec l'élément de contact (20) ou le blindage (16) en l'enveloppant au moins en partie et en venant ainsi au moins indirectement en contact avec le blindage (16) de l'au moins un câble conducteur électrique (10).

2. Système de contact (1) selon la revendication 1, **caractérisé en ce que** l'au moins un élément de contact (20) est la gaine intérieure (21).

3. Système de contact (1) selon la revendication 1, **caractérisé en ce que** l'au moins un élément de contact (20) comprend en outre une gaine extérieure (23), la gaine intérieure (21) étant disposée au moins en partie à l'intérieur de la gaine extérieure (23) dans la position de contact (29), la gaine extérieure (23) comportant une deuxième surface de contact (24) et la première surface de contact (22) de la gaine intérieure (21) et la deuxième surface de contact (24) de la gaine extérieure (23) étant conformées de telle manière que le blindage (16) du câble conducteur électrique (10) soit serré, dans une position de contact (29), entre la gaine intérieure (21) et la gaine extérieure (23) et mis en contact avec l'élément de contact (20), le boîtier blindé (40) étant pressé de façon à reposer sur l'élément de contact (20), de préférence sur l'enveloppe extérieure (23) de l'élément de contact (20), et à envelopper au moins en partie l'élément de contact (20) et venant ainsi au moins indirectement en contact avec le blindage (16) de l'au moins un câble conducteur électrique (10).

4. Système de contact (1) selon l'une des revendications 1 à 3, **caractérisé en ce que** l'au moins un élément de serrage (50), dans sa position d'installation, est placé dans un guide de boîtier (56) à l'intérieur du boîtier de dérivation (30).

5. Système de contact (1) selon l'une des revendications 1 à 4, **caractérisé en ce que** l'au moins un élément de serrage (50) est réalisé de telle manière que les deux mors de serrage (51,52) puissent être assemblés l'un avec l'autre en correspondance de forme ou par friction, de préférence au moyen de vissages (55), d'assemblages enfichés et/ou d'assemblages emboîtés.

6. Système de contact (1) selon l'une des revendications 1 à 5, **caractérisé en ce que** le premier mors de serrage (51) et le deuxième mors de serrage (52) comportent chacun au moins un creux (53, 54), les au moins deux creux (53, 54) étant de forme complémentaire des parties d'extrémité (42, 44) des coques de boîtier blindé (41, 43) du boîtier blindé (40).

7. Système de contact (1) selon l'une des revendications 1 à 6, **caractérisé en ce que** le boîtier blindé (40) comporte, entre la coque de boîtier blindé inférieure (41) et la coque de boîtier blindé supérieure (43), un bord d'isolation CEM (45) de préférence circonférentiel et forme un blindage électromagnétique continu sans interruption.

8. Système de contact (1) selon l'une des revendications 1 à 7, **caractérisé en ce que** le boîtier blindé (40) est fait d'un matériau conducteur électrique.

9. Système de contact (1) selon l'une des revendications 1 à 8, **caractérisé en ce que** le boîtier de dérivation (30) comprend une partie inférieure de boîtier (31) et un couvercle de boîtier (32), la partie inférieure de boîtier (31) et le couvercle de boîtier (32) renfermant de façon étanche l'espace intérieur de boîtier (37), de préférence avec un joint de boîtier (39) disposé entre la partie inférieure de boîtier (31) et le couvercle de boîtier.

10. Système de contact (1) selon l'une des revendications 1 à 9, **caractérisé en ce que** le boîtier de dérivation (30) est fait de matière plastique.

11. Système de contact (1) selon l'une des revendications 1 à 10, **caractérisé en ce que** l'au moins un câble conducteur électrique (10) est fixé avec un élément de fixation (36), éventuellement à l'aide d'un serre-câbles, sur l'au moins une entrée de câbles (33, 34) dans le boîtier de dérivation (30).

12. Système de contact (1) selon l'une des revendications 1 à 11, **caractérisé en ce que** l'au moins une entrée de câbles (33, 34) dans le boîtier de dérivation (30) est rendue étanche avec un joint de câbles (35) et/ou avec un élément de fixation (36).

13. Système de contact (1) selon l'une des revendications 1 à 12, **caractérisé en ce qu'**au moins une deuxième entrée de câbles (34) ou plus est disposée dans le boîtier de dérivation (30) en plus d'une première entrée de câbles (33), sur le même côté du boîtier de dérivation (30) et/ou sur un côté du boîtier différent de la première entrée de câbles (33), la première entrée de câbles (33) et l'au moins une deuxième entrée de câbles (34) ou plus étant munies soit d'un élément de serrage (50) commun, soit chacune d'éléments de serrage (50) séparées.

14. Système de contact (1) selon l'une des revendications 1 à 13, **caractérisé en ce que** le premier (51) et le deuxième (52) mors de serrage de l'au moins un élément de serrage (50) sont faits de métal ou d'un alliage métallique.

15. Système de contact (1) selon l'une des revendications 1 à 13, **caractérisé en ce que** le premier (51) et le deuxième (52) mors de serrage de l'au moins un élément de serrage (50) sont faits de matière plastique.
